# EUROPÄISCHE PATENTANMELDUNG

(11) **EP 1 975 217 A2**
(43) Veröffentlichungstag der Anmeldung: **01.10.2008**
(21) Anmeldenummer: 08005251.7
(22) Anmeldetag: 20.03.2008
(51) Int. Cl.: C09J 9/00, C09J 11/06, C08K 5/00, C08K 5/5313

(54) **Flammgeschützte Klebe- und Dichtmassen**

(30) Priorität: 29.03.2007 DE 102007015083
(71) Anmelder: Clariant International Ltd., 4132 Muttenz (CH)
(72) Erfinder: Bauer, Harald, Dr., 50170 Kerpen (DE); Dietz, Mathias, Dr., 52152 Simmerath (DE); Krause, Werner, Dr., 50354 Hürth (DE)
(74) Vertreter: Paczkowski, Marcus

(57) **Zusammenfassung**

Gegenstand der Erfindung sind flammgeschützte Klebe- und Dichtmassen, enthaltend 0,1 - 99,9 Gew.-% adhäsives oder thermoplastisches Polymer und 0,1 - 99,9 Gew.-% Flammschutzmittel, dadurch gekennzeichnet, dass das Flammschutzmittel mindestens ein Phosphinsäuresalz der Formel (I) und/oder ein Diphosphinsäuresalz der Formel (II), 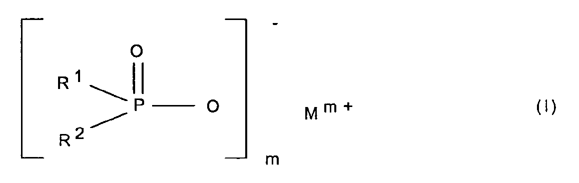 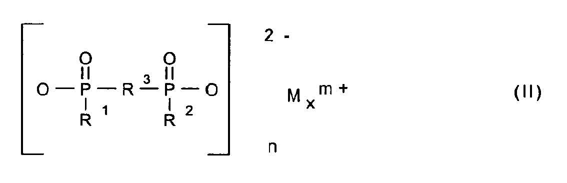 worin
R¹, R²
gleich oder verschieden sind und C₁-C₆Alkyl, linear oder verzweigt und/oder Aryl;
R³
C₁-C₁₀-Alkylen, linear oder verzweigt, C₆-C₁₀-Arylen, -Alkylarylen oder -Arylalkylen;
M
Mg, Ca, Al, Zn, Sb, Sn, Ge, Zn, Ti, Fe, Zr, Ce, Bi, Sr, Mn, Li, Na, K und/oder eine protonierte Stickstoffbase;
m
1 bis 4; n 1 bis 4 und x 1 bis 4 bedeuten, enthält, und wobei es sich bei den adhäsiven Polymeren um Acrylatharze, Polyurethanharze, gesättigte und ungesättigte Polyesterharze, Styrol-Butadien-Copolymere, Vinylacetat-Copolymere, Silicone, Synthesekautschuk und/oder Polyolefinharze handelt.

## Beschreibung

Die Erfindung bezieht sich auf flammgeschützte Klebe- und Dichtmassen, Verfahren zu deren Herstellung, Formkörper, die sie enthalten, und ihre Verwendung.

Nicht flammgeschützte Klebe- und Dichtmassen sind bekannt. Derartige Systeme können mit halogenhaltigen Flammschutzmitteln ausgerüstet werden. Eine weitere Ausrüstungsmöglichkeit besteht in anorganischen Intumeszenzsystemen, besonders Ammoniumpolyphosphat. Letzteres ist vorgesehen für den baulichen Brandschutz. Es wirkt, indem es bei spezifizierter Temperatur zerfällt und gasförmige Zerfallsprodukte die Beschichtungen aufquellen lassen, auf diese Weise eine Isolierschicht bildend, die Konstruktionselemente gegen Feuereinwirkung schützt.

Ein charakteristischer Nachteil der intumeszierenden Systeme auf Basis von Ammoniumpolyphosphat ist, vor allem bei erhöhter Lagertemperatur, eine deutliche Abgabe von alkalisch reagierenden Gasen. Weiter sind anorganische Oberflächeneigenschaften typisch, die z. T. die Verträglichkeit mit Polymeren herabsetzen und denen mit Oberflächenbeschichtungen (Kompatibilizern) entgegen gewirkt werden muss. Nachteilig ist auch die geringe Restlöslichkeit des Ammoniumpolyphosphats, die beim Einsatz in polymeren Formkörpern zu Ausblühungen (Blooming) führen kann.

Aufgabe der Erfindung ist, diese Nachteile zu vermeiden. Erfindungsgemäß wird die Aufgabe gelöst durch flammgeschützte Klebe- und Dichtmassen, welche Flammschutzmittel auf Basis von Phosphinsäuresalzen enthalten. Das erfindungsgemäße Flammschutzmittel ist nicht-intumeszierend, stabil bei erhöhten Lagertemperaturen und gegen heiße Witterungseinflüsse und weist eine Temperaturbeständigkeit auf, wie sie bei der Schwallbadverlötung von elektrischen Bauteilen gefordert wird.

Gegenstand der Erfindung sind daher flammgeschützte Klebe- und Dichtmassen, enthaltend 0,1 - 99,9 Gew.-% adhäsives oder thermplastisches Polymer und 0,1 - 99,9 Gew.-% Flammschutzmittel, dadurch gekennzeichnet, dass das Flammschutzmittel mindestens ein Phosphinsäuresalz der Formel (I) und/oder ein Diphosphinsäuresalz der Formel (II), 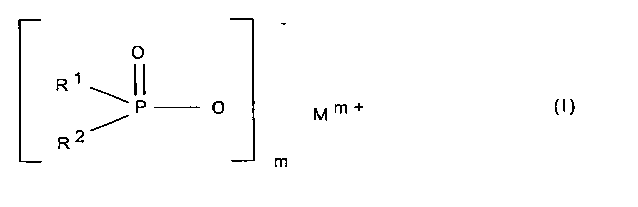 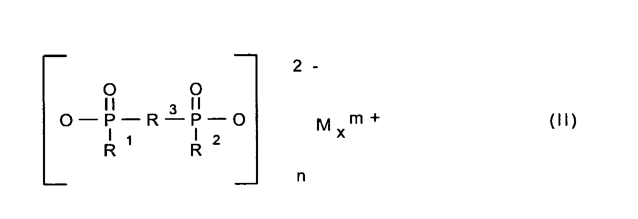 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Zn, Sb, Sn, Ge, Zn, Ti, Fe, Zr, Ce, Bi, Sr, Mn, Li, Na, K und/oder eine protonierte Stickstoffbase;
m 1 bis 4; n 1 bis 4 und x 1 bis 4 bedeuten, enthält, und wobei es sich bei den adhäsiven Polymeren um Acrlyatharze, Polyurethanharze, gesättigte und ungesättigte Polyesterharze, Styrol-Butadien-Copolymere, Vinylacetat-Copolymere, Silicone, Synthesekautschuk und/oder Polyolefinharze handelt.

Bevorzugt sind R¹, R² gleich oder verschieden und bedeuten Methyl, Ethyl, n-Propyl, iso-Propyl, n-Butyl, sec. Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen oder n-Octylen; Phenylen oder Naphthylen; Methylphenylen, Ethylphenylen, tert.-Butylphenylen, Methyl-naphthylen, Ethyl-naphthylen oder tert.-Butylnaphthylen; Phenylmethylen, Phenylethylen, Phenylpropylen oder Phenylbutylen.

Bevorzugt sind das Phosphinsäuresalz der Formel (I) und/oder das Diphosphinsäuresalz der Formel (II) in Mengen von 70 bis 100 Gew.-% im Flammschutzmittel enthalten.

Bevorzugt enthält das Flammschutzmittel
a) 30 bis 99,9 Gew.-% Phosphinsäuresalz der Formel (I) und/oder Diphosphinsäuresalz der Formel (II) und
b) 0,1 bis 70 Gew.-% Synergist.

Besonders bevorzugt enthält das Flammschutzmittel
a) 60 bis 99 Gew.-% Phosphinsäuresalz der Formel (I) und/oder Diphosphinsäuresalz der Formel (II) und
b) 1 bis 40 Gew.-% Synergist.

Bevorzugt enthält der Synergist eine Stickstoff-, Phosphor- oder Phosphorstickstoffverbindung.

Bevorzugt handelt es sich bei dem Synergisten um Allantoin, Cyanursäure, Glycoluril, Harnstoff, Melamin, Melam, Melem, Melon, Melaminphosphat, Melaminpyrophosphat, Melaminpolyphosphat, Melampolyphosphat, Melempolyphosphat, Melonpolyphosphat, Melamincyanurat, Piperazinphosphat, Piperazinpyrophosphat, Carbodiimid, sterisch gehinderte Phenole, Phosphinoxid, Hypophosphit, cyclische Phosphonate, Triaryl(alkyl)phosphite, alkyl- und arylsubstituierte Phosphate, Aluminium-, Zinn-, Bor-, Magnesium-, Calcium-, Cerverbindungen, Zinkoxid, Zinkcarbonat, Zinkstannat, Zinkborat, Zinkhydrogenphosphat, Zinkpyrophosphat, Zinkoleat, Zinkstearat und/oder Zinkphosphat.

Bevorzugt handelt es sich bei den adhäsiven oder thermoplastischen Polymeren um solche, die auf Leim, Cellulose, modifizierte Cellulose, Cellulosederivativen, Stärke, Amylose, Amylopectin oder Polysaccharide basieren.

Bevorzugt handelt es sich bei den adhäsiven oder thermoplastischen Polymeren um solche, die auf einem Elastomer wie Naturkautschuk, Homopolymeren oder Copolymeren von konjugierten Kohlenwasserstoff-Dienen, Chloropren-Homopolymere oder Copolymere, Caboxylgruppen-enthaltende Elastomere, Kautschukabkömmlinge, Regenerat, Synthesekautschuk, Carboxylgruppen-enthaltende Acrylonitril-Butadien-Kautschuk, Butylkautschuk, Elastomere basierend auf Homopolymeren oder Copolymeren von ungesättigten aliphatischen Kohlenwasserstoffen mit nur einer C=C-Doppelbindung und deren Abkömmlinge, basieren.

Bevorzugt handelt es sich bei den adhäsiven oder thermoplastischen Polymeren um solche, die auf Homopolymeren oder Copolymeren von Ethylen, Propylen, Polyethylen, Polypropylen, Copolymere von Ethylen, Propylen oder Isobuten, Homopolymeren oder Copolymeren von Kohlenwasserstoffen mit vier oder mehr Kohlenstoffatomen und durch Modifikation wie chemische Nachbehandlung, Reaktion mit Halogenen oder halogenhaltigen Verbindungen oder Oxidation gewonnene Abkömmlinge basieren.

Werden die flammgeschützten Klebe- und Dichtmasse als hot-melts eingesetzt, handelt es sich bei den thermoplastischen Polymeren um Ethylenmischpolymere, Organopolysiloxane, ataktische Poly-alpha-Olefine (APAO), Polyisobutylen, Styrol-Butadien-Styrol-Blockpolymere, Styrol-Isopren-Styrol-Blockpolymere, Polyamide, Polyester, Polyvinylacetatplastomere, Copolyester, Butylkautschuke, ternäre und quarternäre Copolyamide, Polyurethane und/oder Epoxidharze.

Die Erfindung betrifft auch die Verwendung von flammgeschützten Klebe- und Dichtmassen nach einem oder mehreren der Ansprüche 1 bis 13 in Formkörpern.

Bevorzugt handelt es sich bei den Formkörpern um Laminate, welche mindestens eine nicht klebende Trägerschicht und mindestens eine Klebeschicht enthalten, dadurch gekennzeichnet, dass mindestens eine der Schichten die flammgeschützten Klebe- und Dichtmassen nach einem oder mehreren der Ansprüche 1 bis 13 enthält.

Bevorzugt besteht der Formkörper aus flexiblem Kupferkaschiertem Substrat, Lötstopplack und flammgeschützter Klebe- und Dichtmasse nach einem oder mehreren der Ansprüche 1 bis 13.

Bevorzugt wird der Formkörper hergestellt, in dem die flammgeschützte Klebe- und Dichtmasse auf eine Trägerschicht aufgebracht wird und durch Bestrahlung mit Licht ausgehärtet wird.

Bevorzugt wird der Formkörper hergestellt, in dem eine flammgeschützte Klebe- und Dichtmasse auf einen Trägerfilm auflaminiert wird.

Bevorzugt wird der Formkörper hergestellt, indem ein Trägermaterial auf beiden Seiten mit flammgeschützter Klebe- und Dichtmasse beschichtet wird.

Die Erfindung betrifft schließlich auch die Verwendung der flammgeschützten Klebe-und Dichtmasse nach einem oder mehreren der Ansprüche 1 bis 13 und/oder der Formkörper nach einem oder mehreren der Ansprüche 15 bis 19 für Flachkabel, flexible Leiterplatten, Automobilinnenausrüstung, elektrische Halbleiter, Abdeckungschichten, optische Filme zum Schutz von Fenstern vor Sonneneinstrahlung, Leiterplatten, optische Leiter, Spulen zum Entmagnetisieren, zum Befestigen von elektrischen Bauelementen, zur Herstellung von elektrischen Isolationsmaterialien, Mittel- und Hochspannungsisolatoren, Kabelendverschlüsse, Kabelmuffen, zum Vergießen oder Einbetten von elektrischen oder elektronischen oder photovoltaischen Bauelementen, zum Abdichten, zur Erzeugung von Beschichtungen, zum Isolieren von elektrischen Leitern sowie zum Verkleben und Laminieren der oben genannten Substrate, Windeln, Krankenhaushygieneartikel, Damenhygieneartikel, OP-Bedarf, Inkontinenzartikel, Verkleben von Kartonagen, Verpackungsmaterialien, Klebebänder, Etiketten, Isolierglasscheiben, Verklebungen von Rohren oder Spritzgussteilen, Haftklebemassen, flexible Verklebungen von Printed Circuit Boards, Hitzeaktivierbare Haftklebebänder, zum Verguss von elektrischen bzw. elektronischen Bauteilen und/oder als wärmehärtende Epoxy molding compounds (EMC).

Bevorzugt ist ein Flammschutzmittel enthaltend 100 Gew.-% Phosphinsäuresalz der Formel (I) und/oder Diphosphinsäuresalz der Formel (II).

Bevorzugt betragen die L-Farbwerte des eingesetzten Flammschutzmittels von 81 bis 99,9, besonders bevorzugt von 85 bis 98. Bevorzugt betragen die a-Farbwerte des eingesetzten Flammschutzmittels von -4 bis +9, besonders bevorzugt -2 bis +6. Bevorzugt betragen die b-Farbwerte des eingesetzten Flammschutzmittels von -2 bis +6, bevorzugt -1 bis +3. Die Farbwerte werden im System nach Hunter (CIE-LAB-System, Commission Inter-nationale d'Eclairage) angegeben. L-Farbwerte gehen von 0 (schwarz) bis 100 (weiß), a-Farbwerte von -a (grün) bis +a (rot) und b-Farbwerte von -b (blau) bis +b (gelb).

Bevorzugt beträgt der Restfeuchtegehalt des eingesetzten Flammschutzmittels 0,05 bis 30 Gew.-%, bevorzugt 0,1 bis 5 Gew.-%.

Bevorzugt beträgt der mittlere Teilchendurchmesser (d₅₀) des eingesetzten Flammschutzmittels 0,01 bis 500 µm, bevorzugt 0,1 bis 250 µm.

Bevorzugt beträgt die Löslichkeit des eingesetzten Flammschutzmittels bei Raumtemperatur 0,1 bis 1 Gew.-%, besonders bevorzugt 0,1 bis 0,5 Gew.-%. Die geringere Löslichkeit des Flammschutzmittels ergibt eine erhöhte Witterungsbeständigkeit u. a. bei höherer Umgebungstemperatur.

Bevorzugt ist das Flammschutzmittel nicht intumeszierend bis 300 °C.

Bevorzugt bedeutet M in den Formeln (I) und (II) Calcium, Aluminium, Titan oder Zink.

Unter protonierten Stickstoffbasen werden bevorzugt die protonierten Basen von Ammoniak, Melamin, Monoethanolamin, Diethanolamin, Triethanolamin, insbesondere NH₄⁺, verstanden.

Bevorzugte Dialkylphosphinsäure-Salze sind Aluminiumtrisdiethylphosphinat, Aluminiumtrismethylethylphosphinat, Aluminiumtrisethylbutylphosphinat, Titanylbisdiethylphosphinat, Titantetrakisdiethylphosphinat, Titanylbismethylethylphosphinat, Titantetrakismethylethylphosphinat, Titanylbisethylbutylphosphinat, Titantetrakisethylbutylphosphinat, Zinkbisdiethylphosphinat, Zinkbismethylethylphosphinat, Zinkbisethylbutylphosphinat und Mischungen davon.

Bevorzugt betragen die L-Farbwerte des eingesetzten Phosphinsäuresalzes von 81 bis 99,9, besonders bevorzugt von 90 bis 98. Bevorzugt betragen die a-Farbwerte des eingesetzten Phosphinsäuresalzes von -2 bis +2, besonders bevorzugt -1 bis +1,5. Bevorzugt betragen die b-Farbwerte des eingesetzten Phosphinsäuresalzes von -2 bis +8, bevorzugt -1 bis +7.

Bevorzugt beträgt der Restfeuchtegehalt des eingesetzten Phosphinsäuresalzes 0,05 bis 10 Gew.-%, bevorzugt 0,1 bis 2,5 Gew.-%.

Bevorzugt beträgt der mittlere Teilchendurchmesser des eingesetzten Phosphinsäuresalzes 0,01 bis 500 µm, bevorzugt 1 bis 100 µm.

Bevorzugt beträgt die Schüttdichte des eingesetzten Phosphinsäuresalzes von 80 bis 800 g/l, besonders bevorzugt 200 bis 700 g/l.

Bevorzugt beträgt die Löslichkeit des eingesetzten Phosphinsäuresalzes bei Raumtemperatur 0,1 bis 1 Gew.-%, besonders bevorzugt 0,1 bis 0,5 Gew.-%.

Geeignete Synergisten sind Melaminphosphat (z. B. Melapur^{®} MPH, Melapur^{®} MP der Fa. Ciba-DSM Melapur), Melaminacetat, Dimelaminphosphat, Pentamelamintriphosphat, Trimelamindiphosphat, Tetrakismelamintriphosphat, Hexakismelaminpentaphosphat, Melamindiphosphat, Melamintetraphosphat, Melaminpyrophosphat (z. B. Budit^{®} 311 der Fa. Budenheim, MPP^{®}-B der Fa. Sanwa Chemicals), Melaminpolyphosphate, Melampolyphosphate, Melempolyphosphate und/oder Melonpolyphosphate.

Besonders bevorzugt sind Melaminpolyphosphate wie Melapur^{®} 200/70, Melapur^{®} CGX FR231 der Fa. Ciba-DSM Melapur, Budit^{®} 3141, 3141 CA und 3141 CB und Melaminpolyphosphat/ Melaminpyrophosphat der Typen 13-1100, 13-1105, 13-1115, MPP02-244 der Fa. Hummel-Croton und PMP^{®}-100 bzw. PMP^{®}-200 der Fa. Nissan Chemical Industries, Japan.

Weitere bevorzugte Melaminpolyphosphate sind Umsetzungsprodukte des Melamins mit Phosphorsäure bzw. Umsetzungsprodukte von Kondensationsprodukten des Melamins mit Phosphorsäure sowie Gemische der genannten Produkte. Kondensationsprodukte des Melamins sind z. B. Melem, Melam oder Melon bzw. höher kondensierte Verbindungen dieses Typs sowie Gemische derselben.

Unter den Umsetzungsprodukten mit Phosphorsäure versteht man Verbindungen, die durch Umsetzung von Melamin oder den kondensierten Melaminverbindungen wie Melam, Melem oder Melon etc. mit Phosphorsäure entstehen.

Beispiele hierfür sind Melaminpolyphosphat, Melampolyphosphat (z. B. PMP-200^{™} von Fa. Nissan Chemical Industries) und Melempolyphosphat (z. B. PMP-30^{™} von Fa. Nissan Chemical Industries) bzw. gemischte Polysalze. Geeignete Melaminpolyphosphate sind auch solche, die durch thermische Nachbehandlung von Umsetzungsprodukten von Melamin und/oder von Kondensationsprodukten des Melamins mit Phosphorsäure erhalten werden.

Bevorzugte Synergisten sind weiterhin oligomere Ester des Tris(hydroxyethyl)isocyanurats mit aromatischen Polycarbonsäuren, Benzoguanamin, Tris(hydroxyethyl)-isocyanurat, Melaminkondensationsprodukte wie Melam, Melem und/oder Melon, Melamincyanurat (z. B. Melapur^{®} MC oder Melapur^{®} MC XL der Fa. Ciba-DSM Melapur), Dicyandiamid und/oder Guanidin sowie Melamin-Ammonium-Polyphosphate.

Bevorzugte Synergisten sind weiterhin stickstoffhaltige Phosphate der Formeln (NH₄)_{y}H_{3-y}PO₄ bzw. (NH₄PO₃)_{z}, mit y gleich 1 bis 3 und z gleich 1 bis 10.000.

Bevorzugte Synergisten sind weiterhin Piperazinphosphate und/oder Piperazinpyrophosphate wie z. B. ADK^{®} STAB (ADEKASTAB) FP-4100 (Fa. Asahi Denka).

Erfindungsgemäß sind als Synergisten Stickstoffverbindungen wie Allantoin, Melamin, Cyanursäure, Glycoluril, Harnstoff und ihre Derivate bevorzugt, z. B. solche der Formeln (III) bis (VIII) oder Gemische davon. 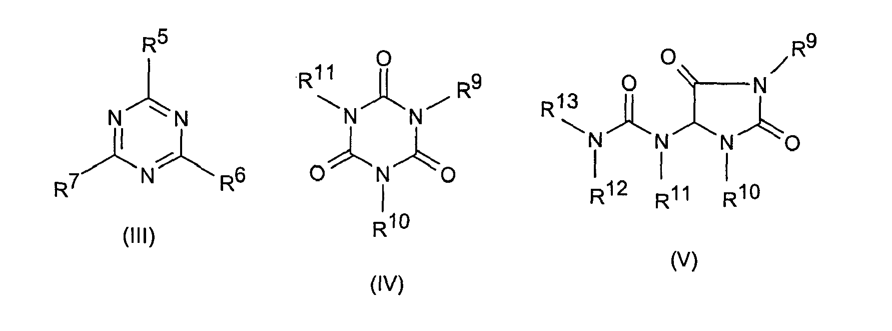 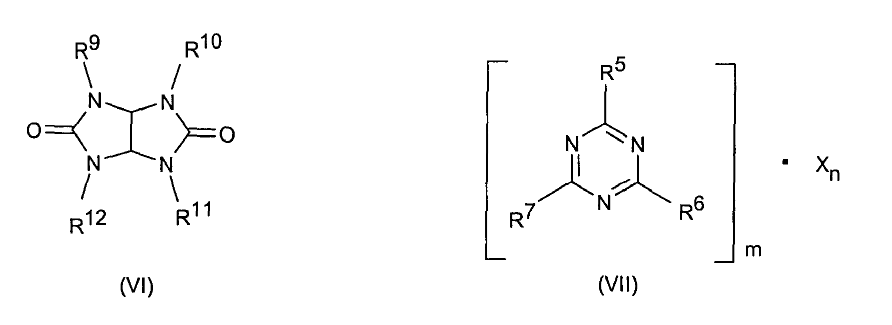 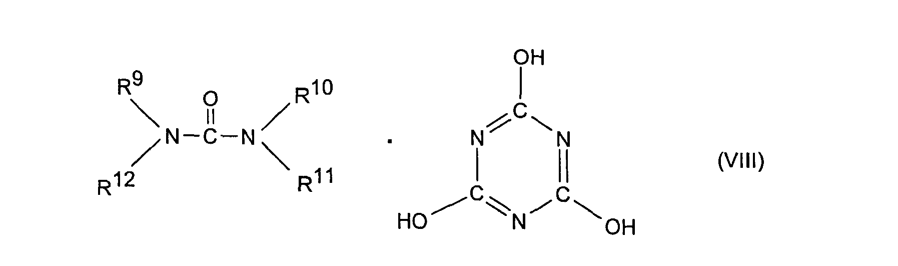 worin
R⁵ bis R⁷ Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxy-alkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, - Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4 und X Säuren, die Addukte mit Triazinverbindungen (III) bilden können, bedeuten.

Bevorzugte Synergisten sind auch Carbodiimide (z. B. Stabaxol^{®} 1, Stabaxol^{®} P, Stabaxol^{®} KE 9193 der Fa. Rhein Chemie), N,N'-Dicyclohexylcarbodiimid und/oder Polyisocyanate (z. B. Basonat^{®} HI 100 oder Vestanat^{®} T 1890/100), Carbonylbiscaprolactam (Fa. Allinco) oder Styrol-Acryl-Polymere (Joncryl^{®} ADR-4357 der Fa. Johnson); sterisch gehinderten Phenole (z. B. Hostanox OSP 1, Fa. Clariant), sterisch gehinderte Amine und Lichtstabilisatoren (z. B. Chimasorb^{®} 944, Hostavin^{®}-Typen).

Bevorzugte Synergisten sind auch Phosphinoxide wie z. B. Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis-(cyclohexyl)-phosphinoxid, Benzylbisphenylphosphinoxid, Phenylbis - (n-hexyl)-phosphinoxid. Bevorzugt sind weiterhin oxidierte Umsetzungsprodukte aus Phosphin mit Aldehyden, insbesondere aus t-Butylphosphin mit Glyoxal. Geeignet ist auch Triphenylphosphinsulfid; elementarer Phosphor, wie z. B. roter und schwarzer Phosphor und schließlich Phosphonite.

Bevorzugte Synergisten sind auch anorganische Hypophosphite wie Calciumhypophosphit und organische Hypophosphite, wie Cellulosehypophosphitester, Ester der hypophosphorigen Säuren mit Diolen, wie z. B. von 1,10-Dodecyldiol.

Zu den geeigneten Synergisten gehören substituierte Phosphinsäuren und deren Abkömmlinge, wie z. B. Natriumbenzolphosphinat (Na(H)C₆H₅PO₂) und Calciumbenzolphosphinat sowie Zn((CH₃)₂PO₂)₂, Zn((C₂H₅)CH₃PO₂)₂ und Al((C₂H₅)(CH₃)PO₂)₃, Diphenylphosphinsäure, Di-p-Tolylphosphinsäure, Di-Kresylphosphinsäureanhydrid, Verbindungen wie Hydrochinon-, Ethylenglykol-, Propylenglykol-bis(diphenylphosphinsäure)ester, Aryl(Alkyl)phosphinsäureamide, wie z. B. Diphenylphosphinsäure-dimethylamid und Sulfonamidoaryl(alkyl)-phosphinsäurederivate, wie z. B. p-Tolyl-sulfonamidodiphenylphosphinsäure.

Bevorzugte Synergisten sind auch anorganische Koordinationspolymere von Aryl(Alkyl)-phosphinsäuren wie z. B. Poly-b-natrium(I)-methylphenylphosphinat.

Geeignete Synergisten sind auch cyclische Phosphonate, die sich vom Pentaerythrit, Neopentylglykol oder Brenzkatechin ableiten, z. B. Amgard^{®} P45 der Firma Albright & Wilson.

Bevorzugte Synergisten sind auch Triaryl(alkyl)phosphiten, wie z. B. Triphenylphosphit, Tris(4-decylphenyl)phosphit, Tris(2,4-ditert.butylphenyl)-phosphit, Trisnonylphenylphosphit (beispielsweise Irgaphos^{®} TNPP von Ciba Geigy AG) oder Phenyldidecylphosphit.

Bevorzugte Synergisten sind auch Diphosphite, wie z. B. Propylenglykol-1,2-bis(diphosphit) oder cyclische Phosphite, die sich vom Pentaerythrit, Neopentylglykol oder Brenzkatechin ableiten.

Bevorzugte Synergisten sind auch Methylneopentylglycolphosphonat und -phosphit sowie Dimethylpentaerythritdiphosphonat und -phosphit.

Bevorzugte Synergisten sind auch Hypodiphosphate, wie z. B. Tetraphenylhypodiphosphat oder Bisneopentylhypodiphosphat.

Bevorzugte Synergisten sind auch alkyl- und arylsubstituierte Phosphate, wie z. B. Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogen-phosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolylbis(2,5,5-trimethylhexyl)phosphat oder 2-Ethylhexyldiphenylphosphat, Triphenylphosphat und Resorcinol-bis-(diphenylphosphat), wie z. B. Fyroflex^{®}-RDP (Fa. Akzo Nobel) sowie CR^{®} 733-S (Fa. Daihachi).

Bevorzugte Synergisten sind auch cyclische Phosphate wie Diphenylpentaerythritdiphosphat und Phenylneopentylphosphat.

Bevorzugte Synergisten sind auch vorzugsweise halogenfreie, polymere Phosphorverbindungen die durch die Reaktion eines Phosphonsäurechlorids, wie z. B. Phenyl-, Methyl-, Propyl-, Styryl- und Vinylphosphonsäuredichlorid mit bifunktionellen Phenolen, wie z. B. Hydrochinon, Resorcin, 2,3,5-Trimethylhydrochinon, Bisphenol-, Tetramethylbisphenol-A entstehen

Bevorzugte Synergisten sind auch durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen herstellbare Verbindungen.

Bevorzugte Synergisten sind auch polymere Phosphonate, die durch Umesterungsreaktionen von Phosphonsäureestern mit bifunktionellen Phenolen oder durch Reaktionen von Phosphonsäureestern mit Diaminen oder Hydraziden gebildet werden.

Bevorzugte Synergisten sind auch oligomere Pentaerythritphosphite, -phosphate und -phosphonate wie z. B. Mobil^{®} Antiblaze 19 (Fa. Mobil Oil)

Bevorzugte Synergisten sind auch und Antioxidantien (z. B. Hostanox^{®} P-EPQ der Fa. Clariant) und Trennmittel (Licomont^{®}-Typen der Fa. Clariant).

Bevorzugte Synergisten sind Verbindungen der Elemente der ersten Nebengruppe, zweiten Haupt- und Nebengruppe und der dritten Haupt- und Nebengruppe, der vierten Haupt- und Nebengruppe, der achten Nebengruppe, Verbindungen der Lanthanidenreihe. Besonders bevorzugt sind Verbindungen der Elemente Aluminium, Bor, Calcium, Magnesium, Zink und Zinn.

Bevorzugte Synergisten sind Aluminiumverbindungen, z. B. Aluminiumoxid, Aluminiumoxidhydroxid (Böhmit, Diaspor), Aluminiumhydroxid (Bayerit, Gibbsit, Hydrargillit) oder Aluminiumphosphat.

Bevorzugte Synergisten sind Zinnverbindungen, z. B. Zinnoxid, Zinnoxidhydrate, Zinn (II) hydroxid oder Zinnsulfid.

Bevorzugte Synergisten sind Borverbindungen, z. B. Borphosphat (Budit^{®} 1304, Fa. Budenheim).

Bevorzugte Synergisten unter den Magnesiumverbindungen sind Magnesiumoxid, Magnesiumhydroxid (z. B. Magnifin^{®} H5 der Fa. Albermarle), Magnesiumoxidhydroxide, Hydrotalcite, Dihydrotalcit, Magnesium-Carbonate, Magnesiumhydroxidcarbonate, Magnesium-Calcium-Carbonate, monobasisches, dibasisches, tribasisches Magnesiumphosphat, Magnesiumhydrogenphosphat, Magnesiumpyrophosphat oder Magnesiumborat (Storflam^{®} MGB 11 von Fa. Storey).

Bevorzugte Synergisten unter den Calciumverbindungen sind Calciumborat, Calciumpyroborat, Calciumcarbonat, Calciumhydroxid, monobasisches, dibasisches, tribasisches Calciumphosphat, Calciumhydrogenphosphat und Calciumpyrophosphat.

Bevorzugte Synergisten sind Zinkverbindungen, z. B. Zinkoxid (z. B. Zinkoxid aktiv von Rhein Chemie, Brüggemann KG, Zincit oder Calamin; Standard-Zinkoxid, Zinkweiss G6, Zinkoxid 2011, Zinkoxid F-80, Zinkweiss Pharma 8, Zinkweiss Pharma A, Zinkweiss Rotsiegel, Zinkweiss Weissiegel der Fa. Grillo-Werke AG), Zinkhydroxid, Zinkoxidhydrat.

Bevorzugte Synergisten sind Zinksalze der Oxosäuren der vierten Hauptgruppe (wasserfreies Zinkcarbonat, basisches Zinkcarbonat, Zinkhydroxidcarbonat, basisches Zinkcarbonathydrat, (basisches) Zinksilicat, Zinkhexafluorosilicat, Zinkhexafluorosilicat hexahydrat, Zinkstannat, Zink-Magnesium-Aluminium-Hydroxid-Carbonat).

Bevorzugte Synergisten sind Zinksalze der Oxosäuren der dritten Hauptgruppe (Zinkborat, z. B. Firebrake^{®} ZB, Firebrake^{®} 415 der Fa. Borax).

Bevorzugte Synergisten sind Zinksalze der Oxosäuren der fünften Hauptgruppe (Zinkphosphat, Zinkhydrogenphosphat, Zinkpyrophosphat).

Bevorzugte Synergisten sind Zinksalze der Oxosäuren der Übergangsmetalle (Zinkchromat(VI)hydroxyd (Zinkgelb), Zinkchromit, Zinkmolybdat, z. B. Kemgard^{®} 911 B, Zinkpermanganat, Zinkmolybdat-Magnesiumsilicat, z. B. Kemgard^{®} 911 C der Fa. Sherwin-Williams Company, Zinkpermanganat)

Bevorzugte Synergisten sind Zinksalze mit organischen Anionen, wie Zinksalze von Mono-, Di-, Oligo-, Polycarbonsäuren (Salze der Ameisensäure (Zinkformiate), der Essigsäure (Zinkacetate, Zinkacetat dihydrat, Galzin), der Trifluoressigsäure (Zinktrifluoracetat hydrat), Zinkpropionat, Zinkbutyrat, Zinkvalerat, Zinkcaprylat, Zinkoleat, Zinkstearat (Liga 101 der Fa. Greven Fett-Chemie), der Oxalsäure (Zinkoxalat), der Weinsäure (Zinktartrat), Zitronensäure (tribasisches Zinkcitrat dihydrat), Benzoesäure (Benzoat), Zinksalicylat, Milchsäure (Zinklactat, Zinklactat trihydrat), Acrylsäure, Maleinsäure, Bernsteinsäure, von Aminosäuren (Glyzin), von sauren Hydroxofunktionen (Zinkphenolat etc), Zink-para-Phenolsulfonat, Zink-para-Phenolsulfonat hydrat, Zinkacetylacetonat hydrat, Zinktannat, Zinkdimethyldithiocarbamat, Zinktrifluormethansulfonat.

Geeignet sind auch Zinkphosphide, Zinksulfide, Zinkselenide und Zinktelluride.

Bevorzugte Synergisten unter den Cerverbindungen sind Cer(III)carbonathydrat, Cer(IV)oxid, Cer(III)phosphat, Cermolybdat, Cerwolframat, Cervanadat.

Bevorzugt betragen die L-Farbwerte der eingesetzten Synergisten von 81 bis 99,9, besonders bevorzugt von 85 bis 98; die a-Farbwerte der eingesetzten Synergisten von -2 bis +2, besonders bevorzugt -1 bis +1,5 und die b-Farbwerte der eingesetzten Synergisten von -2 bis +8, bevorzugt -1 bis +7.

Bevorzugt beträgt der Restfeuchtegehalt der eingesetzten Synergisten 0,05 bis 10 Gew.-%, bevorzugt 0,1 bis 5 Gew.-%.

Bevorzugt beträgt der mittlere Teilchendurchmesser der eingesetzten Synergisten 0,1 bis 500 µm, bevorzugt 1 bis 100 µm.

Bevorzugt beträgt die Löslichkeit der eingesetzten Synergisten bei Raumtemperatur 0,1 bis 1 Gew.-%, besonders bevorzugt 0,1 bis 0,5 Gew.-%.

Erfindungsgemäße adhäsive Polymere sind Acrylatharze, Polyurethanharze, gesättigte und ungesättigte Polyesterharze, Harze auf Styrol-Butadien-Copolymer-Basis, Vinylacetat-Copolymere, Silicone, Synthesekautschuk, Acrylkautschuk, Epoxidharze und Polyolefinharz. Erfindungsgemäß bevorzugt ist die Glasübergangstemperatur des adhäsiven Polymers kleiner oder gleich 25 °C.

Erfindungsgemäße flammgeschützte Klebe- und Dichtmassen enthalten 50 - 99 Gew.-% adhäsive Polymere und 1 - 50 Gew.-% Flammschutzmittel.

Erfindungsgemäß bevorzugt ist die Verwendung von flammgeschützten Polymerformmassen, enthaltend 50 - 99,9 Gew.-% adhäsive Polymere und 1 - 50 Gew.-% erfindungsgemäßes Flammschutzmittel für flammgeschützte Klebe-und Dichtmassen.

Erfindungsgemäße adhäsive oder thermoplastische Polymere für die erfindungsgemäßen flammgeschützten Klebe- und Dichtmassen basieren auf Leim, Cellulose, modifizierte Cellulose, Cellulosederivativen, Stärke, Amylose oder Amylopectin oder ihre Derivative oder Abbauprodukte, Polysaccharide oder ihre Derivative, organische nichtmakromolekulare Verbindungen mit mindestens einer ungesättigten polymerisierbaren C-C-Bindung.

Erfindungsgemäße adhäsive oder thermoplastische Polymere für die erfindungsgemäßen flammgeschützten Klebe- und Dichtmassen basieren auf einem Elastomer wie Naturkautschuk, Homopolymeren oder Copolymeren von konjugierten Kohlenwasserstoff-Dienen, Chloropren-Homopolymere oder Copolymere, Caboxylgruppen-enthaltende Elastomere, Kautschukabkömmlinge, Regenerat, Synthesekautschuk, Carboxylgruppen-enthaltende Acrylonitril-Butadien-Kautschuk, Butylkautschuk, Elastomere basierend auf Homopolymeren oder Copolymeren von ungesättigten aliphatischen Kohlenwasserstoffen mit nur einer C=C-Doppelbindung und deren Abkömmlinge.

Erfindungsgemäße adhäsive oder thermoplastische Polymere für die erfindungsgemäßen flammgeschützten Klebe- und Dichtmassen basieren auf Homopolymeren oder Copolymeren von Ethylen, Propylen, Polyethylen, Polypropylen, Copolymere von Ethylen, Propylen oder Isobuten, Homopolymeren oder Copolymeren von Kohlenwasserstoffen mit vier oder mehr Kohlenstoffatomen und durch Modifikation wie chemische Nachbehandlung, Reaktion mit Halogenen oder Halogenhaltigen Verbindungen oder Oxidation gewonnene Abkömmlinge.

Erfindungsgemäße adhäsive oder thermoplastische Polymere für die erfindungsgemäßen flammgeschützten Klebe- und Dichtmassen basieren auf Homopolymeren oder Copolymeren von Verbindungen, die eine oder mehrere ungesättigte aliphatische Gruppe enthalten. Jede mit einer C=C-Doppelbindung, von denen mindestens eine terminiert ist mit: einem aromatischen carbocyclischen Ring, einem Halogen, einer Alkohol-, Ether-, Aldehyd-, Keto-, Acetal-, Acyloxy-, Carboxy-Funktion, einem ein Sauerstoffatom enthaltenden heterocyclischen Ring, eine Einfach- oder Doppelbindung zu Stickstoff oder Schwefel oder durch einen ein Stickstoff- oder Schwefelatom enthaltenden heterocyclischen Ring.

Erfindungsgemäße adhäsive oder thermoplastische Polymere für die erfindungsgemäßen flammgeschützten Klebe- und Dichtmassen basieren auf Homopolymeren oder Copolymeren, die keine ungesättigte Gruppe von einer Nebenkette enthalten und die eine oder mehrere C=C-Doppelbindungen in einem carbocyclischen oder heterocyclischen System enthalten.

Erfindungsgemäße adhäsive oder thermoplastische Polymere für die erfindungsgemäßen flammgeschützten Klebe- und Dichtmassen basieren auf Homopolymeren oder Copolymeren von Verbindungen, die eine oder mehrere ungesättigte aliphatische Gruppen enthalten von denen mindestens eine zwei oder mehr C=C-Doppelbindungen enthält.

Geeignete adhäsive oder thermoplastische Polymere für die erfindungsgemäßen flammgeschützten Klebe- und Dichtmassen basieren auf Homopolymeren oder Copolymeren von Verbindungen, die eine oder mehrere C-C-Dreifachbindungen enthalten.

Erfindungsgemäße adhäsive oder thermoplastische Polymere für die erfindungsgemäßen flammgeschützten Klebe- und Dichtmassen basieren auf PfropfPolymeren, bei denen die gepfropfte Komponente erhalten wird durch Reaktionen, die nur die ungesättigten C-C-Bindungen betreffen.

Erfindungsgemäße adhäsive oder thermoplastische Polymere für die erfindungsgemäßen flammgeschützten Klebe- und Dichtmassen basieren auch auf
- Polyacetalen und deren Abkömmlingen,
- Kondensationspolymeren von Aldehyden oder Ketonen (mit Polyalkoholen bzw. Polynitrilen),
- Epoxyharzen und deren Abkömmlingen,
- Makromolekülen, die durch Reaktionen erhalten werden, die eine C-C-Bindung in der Hauptkette bilden
- Polyestern, die durch Reaktionen erhalten werden, die eine Carboxylester-Bindung in der Hauptkette bilden (basieren auf Polyesteramiden, Polyesterimiden),
- Polycarbonaten und deren Abkömmlingen,
- Polyether, die durch Reaktionen erhalten werden, die eine Ether-Bindung in der Hauptkette bilden (basierend auf Polyacetalen, Epoxyharzen, Polythioether, Polyethersulfone),
- Makromolekülen, die durch Reaktionen erhalten werden, die eine Sauerstoffenthaltende Bindung - mit oder ohne Kohlenstoff - in der Hauptkette bilden
- Polyharnstoffen oder Polyurethanen oder ihren Abkömmlingen,
- Polyamiden, die durch Reaktionen erhalten werden, die eine Carboxylamidbindung in der Hauptkette bilden (Polyhydrazide, Polyamid-Imide) und ihre Abkömmlinge,
- Polyamiden, die durch Reaktionen erhalten werden, die eine Stickstoff enthaltende Bindung - mit oder ohne Sauerstoff - oder eine nur Kohlenstoff enthaltende Bindung in der Hauptkette bilden,
- Makromolekülen, die durch Reaktionen erhalten werden, die eine Schwefelhaltige Bindung (Polysulfone) in der Hauptkette bilden, mit oder ohne Stickstoff, Sauerstoff oder Kohlenstoff,
- Makromolekülen, die durch Reaktionen erhalten werden, die eine Siliciumhaltige Bindung in der Hauptkette bilden,
- Proteinen und ihren Abkömmlingen,
- Ölen, Fetten oder Wachsen,
- Naturharzen und ihren Abkömmlingen,
- bituminösen Stoffen, z. B. Asphalt, Teer, Pech,
- Lignin enthaltenden Stoffen sowie
natürlichen Makromolekülen und ihren Abkömmlingen.

Geeignete Acrylatharze sind Homo- und Copolymere auf Basis folgender Monomerer: C₁₋₁₄-Alkylacrylate oder Alkylmethacrylate d.h. Alkylester von Acrylsäure oder Alkylester von Methacrylsäure wie z. B. Ethylacrylat, Propylacrylat, Isopropylacrylat, n-Butylacrylat, Isobutylacrylat, s-Butylacrylat, t-Butylacrylat, Pentylacrylat, Hexylacrylat, Heptylacrylat, Octylacrylat, 2-Ethylhexylacrylat, Nonylacrylat, Decylacrylat, Laurylacrylat, Stearylacrylat, Acrylsäure, 2-Hydroxyethylacrylat, Isobornylacrylat, Methylmethacrylat, Ethylmethacrylat, Propylmethacrylat, Isopropylmethacrylat, n-Butylmethacrylat, Isobutylmethacrylat, s-Butylmethacrylat, t-Butylmethacrylat, Pentylmethacrylat, Hexylmethacrylat, Heptylmethacrylat, Octylmethacrylat, 2-Ethylhexylmethacrylat, Nonylmethacrylat, Decylmethacrylat, Laurylmethacrylat, Stearylmethacrylate, 2-Hydroxyethylmethacrylat, Phosphoxyethylmethacrylat. Geeignete Acrylate sind Cycloalkylester von Acrylsäure z. B. Cyclohexylacrylat und Cycloalkylester von Methacrylsäure z. B. Cyclohexylmethacrylate.

Geeignete Acrylate sind Glycidylacrylat und Glycidylmethacrylat; Carboxysäuremodifizierte Acrylelastomere sowie Methylmethacrylat-Butadien-Acrylonitril-StyrolCopolymere; Ethylen-Acrylsäure-Copolymere, Ethylen-Acrylsäure-Ethylacrylat-Copolymers, Ethylen-Methylacrylat-Methacrylsäure-Copolymere, Ethylen-Vinylacetat (EVA)-Copolymere, Ethylen-Vinylacetat-Ethylacrylat-Copolymere, Ethylen-Butylacrylat (EBA)-Copolymere, Ethylen-Methylacrylate (EMA)-Copolymere, Ethylen-Ethylacrylat-Copolymere, Ethylen-n-Hexylacrylat-Copolymere, Ethylen-2-Ethylhexylacrylat-Copolymere, Ethylen-Glycidylmethacrylat-Copolymere, Ethylen-Glycidylmethacrylat-Ethylacrylate-Copolymer und auch Homo- und Copolymere enhaltend folgende Monomere: Methyl(Meth)acrylat 0 - 40 Gew.-%, Butylacrylat 0 - 6 Gew.-%, 2-Ethylhexylacrylat 10-98 Gew.-%, Acrylsäure 0,30 Gew.-%, Hydroxyethylacrylat 0-10 Gew.-%.

Erfindungsgemäß bevorzugt ist eine flammgeschützte Klebe- und Dichtmasse, enthaltend 40 - 99 Gew.-% Acrylat Polymer, 1 - 60 Gew.-% Flammschutzmittel und 0,1 - 10 Gew.-% Photoinitiator oder Radikalinitiator wie z. B. Cumolhydroperoxid, Benzoylperoxid, Azobisisobutyronitril, t-Butylhydroperoxid, Kaliumpersulfat und/oder Ammoniumpersulfate. Bevorzugt weist diese Mischung eine Glasübergangstemperatur über 40 °C auf.

Geeignete Polyurethanharze sind Verbindungen, die eine endständige IsocyanatGruppe enthalten, die durch die Reaktion eines Polyols und eines organischen Polyisocyanates und eines Kettenverlängerungsmittels entstanden ist.

Geeignete Polyole sind Polyetherpolyole (z. B. erhalten durch Polymerisation eines Alkylenoxides wie z. B. Ethylenoxide, Propylenoxid, Styroloxide oder Epichlorohydrin) und Polyetheresterpolyol etc.

Geeignete Polyesterpolyole und Polyetheresterpolyole werden erhalten durch Kondensation von z. B. gesättigter oder ungesättigter Polycarboxylsäure oder Anhydride wie z. B. Bernsteinsäure, Adipinsäure, Phthalsäure und Maleinanhydrid mit gesättigten oder ungesättigten mehrwertigen Alkoholen wie Ethylenglycol, Diethylenglycol, 1,4-Butandiol, Neopentylglycol, 1,6-Hexandiol und Trimethylolpropan oder Polyalkyleneetherglycolen wie Polyethylenglycol und Polypropylenglycol.

Geeignete organische Isocyanate sind aromatische Diisocyanate wie Isomere von Toluidinisocyanat und 4,4-Diphenylmethandiisocyanat; aromatische aliphatische Diisocyanate wie Xylylendiisocyanat; alicyclische Diisocyanate wie Isophorondiisocyanat, 4,4-Dicyclohexylmethandiisocyanat; aliphatische Diisocyanate wie Hexamethylenedüsocyanat und 2,2,4-Trimethylhexamethylendiisocyanat und Polyisocyanate, die durch Addition obiger Verbindungen an Trimethylolpropan erhalten werden.

Geeignete Kettenverlängerer sind Ethylenglycol, Diethylenglykol, 1,4-Butandiol und 1,6-Hexandiol; mehrwertige Alkohole wie Glycerin, Trimetylolpropan und Pentaerythrit; Diamine wie Ethylendiamin, Hexaethylenediamin und Piperazin; Aminoalkohole wie Monoethanolamine und Diethanolamine; Thiodiglykol wie Thiodiethylenglykol sowie Wasser.

Geeignete Polyurethane sind Impranil^{®} DLS und DLP von Fa. Bayer.

Erfindungsgemäß bevorzugt ist eine flammgeschützte Klebe- und Dichtmasse, enthaltend 90 - 99 Gew.-% Polyurethanharze und 1-10 Gew.-% Flammschutzmittel.

Geeignete Polyesterharze enthalten eine Dicarbonsäurekomponente und/oder eine Glykolkomponente und/oder eine verzweigte Glykolkomponente.

Erfindungsgemäße verzweigte Glycolkomponente sind 2,2-Dimethyl-1,3-propandiol, 2-Methyl-2-ethyl-1,3-propandiol, 2-Methyl-2-butyl-1,3-propandiol, 2-Methyl-2-propyl-1,3-propandiol, 2-Methyl-2-isopropyl-1,3-propandiol, 2-Methyl-2-n-hexyl-1,3-propandiol, 2,2-Diethyl-1,3-propandiol, 2-Ethyl-2-n-butyl-1,3-propandiol, 2-Ethyl-2-n-hexyl-1,3-propandiol, 2,2-Di-n-butyl -1,3-propandiol, 2-n-Butyl-2-propyl-1,3-propandiol und 2,2-Di-n-hexyl-1,3-propandiol.

Erfindungsgemäße Glykolkomponenten sind Ethylenglykol, Diethylenglykol, Propylenglykol, Butandiol, Hexandiol, 1,4-Cyclohexandimethanol.

Geeignete Dicarbonsäurekomponenten sind Terephthalsäure, Isophthalsäure, 2,6-Naphthalindicarbonsäure, 5-Sulfoisophthalsäure, Sulfoterephthalsäure; 4-Sulfonaphthalinisophthalsäure, 5-(4-Sulfophenoxy)isophthalsäure.

Erfindungsgemäß bevorzugt ist eine flammgeschützte Klebe- und Dichtmasse, enthaltend 40 - 99 Gew.-% Polyesterharz und 1-60 Gew.-% erfindungsgemäßes Flammschutzmittel.

Bevorzugt sind ungesättigte Polyesterharze (UP-Harze), die sich von Copolyestern gesättigter und ungesättigter Dicarbonsäuren oder deren Anhydriden mit mehrwertigen Alkoholen, sowie Vinylverbindungen als Vernetzungsmittel ableiten. UP-Harze werden gehärtet durch radikalische Polymerisation mit Initiatoren (z. B. Peroxiden) und Beschleunigern. Bevorzugte ungesättigte Dicarbonsäuren und -derivate zur Herstellung der Polyester sind Maleinsäureanhydrid und Fumarsäure. Bevorzugte gesättigte Dicarbonsäuren sind Phthalsäure, Isophthalsäure, Terephthalsäure, Tetrahydrophthalsäure, Adipinsäure.

Bevorzugte Diole sind 1,2 Propandiol, Ethylenglykol, Diethylenglykol und Neopentylglykol, ethoxyliertes oder propoxyliertes Bisphenol A. Bevorzugte Vinylverbindung zur Vernetzung ist Styrol.

Bevorzugte Härtersysteme sind Peroxide und Metallcoinitiatoren z. B. Hydroperoxide und Cobaltoctanoat und/oder Benzoylperoxid und Aromatische Amine und/oder UV-Licht und Photosensibilisatoren z. B. Benzoinether.

Bevorzugte organische Peroxide sind Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid, Dicyclohexylperoxiddicarbonat, Cumolhydroperoxid, p-Menthenhydroperoxid, tert.-Butylhydroperoxid, Diisopropylbenzoldihydroperoxid, Methylethylketonperoxid, tert.-Butylperoxobenzoat.

Bevorzugt werden die Initiatoren in Mengen von 0,1 bis 20 Gew. -%, vorzugsweise 0,2 bis 15 Gew.-%, berechnet auf die Masse aller Comonomeren, eingesetzt.

Bevorzugte Metallcoinitiatoren sind Kobalt-, Mangan-, Eisen-, Vanadium -, Nickel-oder Bleiverbindungen. Bevorzugt werden Metallcoinitiatoren in Mengen von 0,05 bis 1 Gew.-%, berechnet auf die Masse aller Comonomeren, eingesetzt.

Bevorzugte aromatische Amine sind Dimethylanilin, Dimethyl-p-toluol, Diethylanilin und Phenyldiethanolamine.

Erfindungsgemäße Harze auf Styrol-Butadien-Basis enthalten Styrol-Butadien-Copolymer oder ein Acrylnitril-Butadien-Styrol-Copolymer oder ein Styrol-Ethylen-Butadien-Styrol-Copolymer oder ein Vinylpyridine-Styrol-Butadiene-Copolymer.

Erfindungsgemäß bevorzugt ist eine flammgeschützte Klebe- und Dichtmasse, enthaltend 50 - 97 Gew.-% Styrol-Butadien-Harz und 3 - 50 % erfindungsgemäßes Flammschutzmittel.

Geeignete Vinylacetat-Copolymere basieren auf Estern von Vinylalkohol mit einer niedrigen Carbonsäure (z. B. Vinylacetat), wie z. B. Vinylacetat-Vinylpyrrolidon-Copolymer, Vinylacetat-Acrylat-Copolymer, 2-Ethylhexylacrylat-Vinylacetat-Copolymer und Ethylen-Vinylacetat-Copolymer (Elvax^{®}-Typen von Fa. DuPont).

Geeignete Silicone auf Siliconkautschukbasis besitzen eine lineare, teilweise verzweigte oder cyclische Organopolysiloxan-Struktur, die eine Hauptkette besitzen, die aus Diorganosiloxan-wiederholungseinheiten wie z. B. Dimethylsiloxan, Diphenylsiloxan aufgebaut sind.

Geeignete Organopolysiloxane haben Kettenenden, von Triorganosiloxygruppen wie die Trimethylsiloxygruppe, Dimethylphenylsiloxygruppe, Dimethylhydroxysiloxygruppe, Dimethylvinylsiloxygruppe oder Trivinylsiloxygruppe. Der mittlerePolymerisationsgrad (Gewichtsmittel) ist bevorzugt 100 bis 100.000, besonders 200 bis 10.000.

Erfindungsgemäß bevorzugt ist eine flammgeschützte Klebe- und Dichtmasse, enthaltend 50 - 98 Gew.-% Organopolysiloxane und 2 - 50 Gew.-% Flammschutzmittel.

Geeignete Synthesekautschuke sind synthetische Kautschuk-Blockcopolymere des ABA- oder AB-Blocktyps, wobei A ein thermoplastischer Block und B ein Elastomerblock ist. Das Blockcopolymer kann linear, verzweigt, radial aufgebaut sein und Kombinationen davon. Erfindungsgemäß bevorzugte Copolymere umfassen Styrol-Isopren-Styrol (SIS), Styrol-Butadien-Styrol (SBS), Styrol-Ethylen-Butadien-Styrol (SEBS), Styrol-Butadiene (SB), Ethylen-Propylen-Diene. Geeignete Synthesekautschuke sind Kraton^{®} 1107, 1101, 1111, 1112 and 1117 von Shell Chemical Company und Vector^{®} 4100 von Dexco Polymers, Zetpol^{®} 2020 von Fa. Zeon Corporation, PNR^{®}-1H von Fa. JSR Corporation, Nipol^{®} 1072 von Fa. Zeon Corporation.

Geeignete Acryl-Kautschuke sind Copolymere von Ethylacrylat und Chloroethylvinylether, Copolymere von n-Butylacrylat und Acrylonitril, Copolymere von Ethylacrylat und Acrylnitril, Urethanmodifizierte Acrylkautschuke, Styrol-Acrylnitril-Copolymere, Polymere wie Methylmethacrylate-Acrylnitril.

Bevorzugt ist eine flammgeschützte Klebe- und Dichtmasse, enthaltend 50 - 95 Gew.-% Synthesekautschuk und 2-50 Gew.-% Flammschutzmittel.

Geeignete Epoxyharze basieren auf Diglycidylether wie z. B. Bisphenol A, Bisphenol F, Bisphenol S, Resorcinol, Dihydroxynaphthalene und Dicyclopentadienediphenol, alicyclische Epoxy-Harze wie epoxidierte Phenolnovolake, epoxidierte Kresolnovolake, epoxidierte Trisphenylolmethane, epoxidierte Tetraphenylolethane, Epoxyharze vom Bisphenoltyp oder vom Novolaktyp. Geeignete Epoxyharze sind Epikote^{®}-Typen (Phenoxyharze) und YL^{®}7175-1000 von Fa. Japan Epoxy Resins, EP^{®}-49-20 von Fa. Asahi Denka, EPPN^{®}-502H und EOCN^{®}-103S von Fa. Nippon Kayaku.

Bevorzugt ist eine flammgeschützte Klebe- und Dichtmasse, enthaltend
A) 40 - 99,8 Gew.-% Epoxyharz
B) wahlweise Phenoxyharz
C) 0,1-10 Gew.-% Härter
D) wahlweise Synthesekautschuk
E) 0,1 - 50 Gew.-% Flammschutzmittel

Geeignete Polyolefinharze sind Polyethylene (z. B. low-density Polyethylen, lineares low-density Polyethylen, ultralow-density Polyethylen, medium-density Polyethylen, high-density Polyethylen), Polypropylen, Polybutylen, Polybutadien und Copolymers (besonders statistische Copolymer) von Ethylen und/oder Propylen mit anderen alpha-Olefinen wie z. B. Ethylen-Propylen-Copolymere (statistisches Copolymer).

Geeignete adhäsive Polymere sind radikalisch, durch Einstrahlung von UV-Licht, durch Säuren, Amine und/oder Feuchtigkeit vernetzbar bzw. härtbar.

Schmelzkleber sind lösemittelfreie Klebestoffe, die auf den zu verklebenden Substraten in heißem, schmelzflüssigen Zustand aufgetragen werden und nach dem Erstarren ihre Klebewirkung entfalten.

Bevorzugt ist die Verwendung der erfindungsgemäßen flammgeschützten Klebe- und Dichtmassen als flammgeschützte Hot-melts.

Erfindungsgemäße flammgeschützte Klebe- und Dichtmassen enthalten 50 - 99 Gew.-% thermoplastische Polymere und 1 - 50 Gew.-% Flammschutzmittel.

Bevorzugt ist die Verwendung von flammgeschützten Polymerformmassen enthaltend 50 - 99 Gew.-% thermoplastische Polymere und 1 - 50 Gew.-% Flammschutzmittel als flammgeschützte Klebe- und Dichtmassen.

Erfindungsgemäße flammgeschützte Klebe- und Dichtmassen enthalten auch 0,1 - 60 Gew.-% thermoplastische Polymere, 1 - 50 Gew.-% Flammschutzmittel, 20 - 65 Gew.-% Harz, 0,1 - 100 Gew.-% Wachse und 0,1-10 Gew.-% Additive.

Bevorzugter Schmelzbereich der thermoplastischen Polymere ist 100 bis 250 °C, besonders bevorzugt 110 bis 200 °C. Dies ist deutlich unter dem Schmelzbereich der flammgeschützten Polymerformmassen auf Basis von Diethylphosphinsäuren nach dem Stand der Technik.

Geeignete thermoplastische Polymere sind Mischungen von Epoxidharz, Ethylenmischpolymer, optional Polyester und optional Härter.

Geeignete Epoxidharze basieren auf Bisphenol-A bzw Bisphenol-F wie z. B. D.E.R^{®} oder DERAKANE^{®} von Dow Chemical, und Novolac-modifizierte Epoxyharze wie z. B. D.E.N^{®} von Dow Chemical.

Geeignete Epoxidharze sind Vinylesterharze, z. B. Reaktionsprodukte von Acrylsäure oder Methacrylsäure und Epoxidharze wie z. B. Derakane^{®}-Typen von Dow Chemical.

Geeignete Ethylenmischpolymere sind Ethylen-Acrylsäure-Copolymere, Ethylen-Methacrylsäure-Copolymere, Ethylen-Vinylacetat-Copolymere, Ethylen-Vinylacetat-Maleinanhydrid-Copolymere, Ethylen-Acrylat-Maleinanhydrid-Copolymere, Ethylen-Acrylat-Glycidylmethacrylat-Copolymere.

Geeignete thermoplastische Polymere sind Organopolysiloxane mit einem Rückgrad von Diorganopolysiloxygruppen mit Organyl gleich Methyl-, Ethyl-, n-Propyl-, i-Propyl-, 1-n-Butyl-, 2-n-Butyl-, i-Butyl-, t-Butyl-, n-Pentyl-, i-Pentyl-, neo-Pentyl-, t-Pentyl-, n-Hexyl-, n-Heptyl-, n-Octyl-, i-Octyl-, 2,2,4-Triethylpentyl-, n-Nonyl-, n-Decyl-, n-Dodecyl-, Cyclopentyl-, Cycolohexyl-, Cycloheptyl-, Methylcyclohexyl-, Phenyl-, Naphtyl-, o-Tolyl-, m-Tolyl-, p-Tolyl-, Xylyl-, Ethylphenyl-, Benzyl-, alphaund beta-Phenylethyl und von Diorganopolysiloxygruppen mit Organyl gleich Wasserstoff, Methyl-, Ethyl-, n-Propyl-, i-Propyl-, 1-n-Butyl-, 2-n-Butyl-, i-Butyl-, t-Butyl-, n-Pentyl-, i-Pentyl-, neo-Pentyl-, t-Pentyl-, n-Hexyl-, n-Heptyl-, n-Octyl-, i-Octyl-, 2,2,4-Triethylpentyl-, n-Nonyl-, n-Decyl-, n-Dodecyl-, Cyclopentyl-, Cycolohexyl-, Cycloheptyl-, Methylcyclohexyl-, Phenyl-, Naphtyl-, o-Tolyl-, m-Tolylp-Tolyl-, Xylyl-, Ethylphenyl-, Benzyl-, der alpha- und der beta-Phenylethylrest, einwertige, aliphatisch ungesättigte Kohlenwasserstoffreste mit 2 bis 20 Kohlenstoffatomen (Vinyl-, Allyl-, 3-Butenyl-, 4-Pentenyl-, 5-Hexenyl-, 7-Octenyl-, 9-Decenyl- und 13-Decenyl) und mit endständigen Triorganopolysiloxygruppen mit Organyl gleich Wasserstoff, Methyl-, Ethyl-, n-Propyl-, i-Propyl-, 1-n-Butyl-, 2-n-Butyl, i-Butyl-, t-Butyl-, n-Pentyl-, i-Pentyl-, neo-Pentyl-, t-Pentyl-, n-Hexyl-, n-Heptyl-, n-Octyl-, i-Octyl-, 2,2,4-Triethylpentyl-, n-Nonyl-, n-Decyl-, n-Dodecyl-, Cyclopentyl-, Cycolohexyl-, Cycloheptyl-, Methylcyclohexyl-, Phenyl-, Naphtyl-, o-Tolyl-, m-Tolyl-, p-Tolyl-, Xylyl-, Ethylphenyl-, Benzyl-, der alpha- und der beta-Phenylethylrest, einwertige, aliphatisch ungesättigte Kohlenwasserstoffreste mit 2 bis 20 Kohlenstoffatomen (Vinyl-, Allyl-, 3-Butenyl-, 4-Pentenyl-, 5-Hexenyl-, 7-Octenyl-, 9-Decenyl- und 13-Decenyl).

Geeignete Organopolysiloxane weisen einen Rückgrad von Diorganopolysiloxygruppen mit 75 - 85 % Dimethylsiloxygruppen und 15 - 25 % Vinylmethylsiloxygruppen auf.

Geeignete thermoplastische Polymere sind Organopolysiloxane mit einem Rückgrad von Diorganopolysiloxygruppen und mit endständigen Triorganopoly-siloxygruppen wobei die Organylgruppen Mercapto-, Amino-, Alkenyl, Methacryloxy-, Acryloxygruppen, Alkoxy-, Acryloxyalkyl, Epoxy-, Isocyanuratreste tragen können.

Geeignete thermoplastische Polymere sind polare oder unpolare Polymere, insbesondere ataktische Poly-alpha-Olefine (APAO), Polyisobutylen, Styrol-Butadien-Styrol-Blockpolymere, Styrol-Isopren-Styrol-Blockpolymere, Polyamide, Polyester.

Geeignete thermoplastische Polymere sind Polyvinylacetatplastomere.

Geeignete thermoplastische Polymere sind Copolyester wie z. B. in ABA-Triblocksegmenten copolymerisierte Zusammensetzungen mit Hydroxylterminierten Polyalkylenoxiden (Block A) und Polydimethylsiloxan als Block B.

Geeignete Copolyester enthalten einen Block mit niedriger Polarität in das Copolyester-Rückgrad eingebaut. Der Block mit niedriger Polarität wird zusammen mit difunktionalen Alkoholen, Dicarbonsäuren und wahlweise polyfunktionellen Verzweigungsmitteln einpolymerisiert.

Geeignete difunktionale Alkoholen sind C₂₋₁₂-Alkyldiolen, wie z. B. Ethylenglycol, Diethylenglycol, Butandiol, Propandiol, Hexandiol.

Geeignete Dicarbonsäuren sind aliphatische C₄₋₃₆-Disäuren, wie Adipinsäure, Azelainsäure, Sebacinsäure, Terephthal-, Isophthalsäure und Naphtalindicarbonsäure.

Geeignete polyfunktionelle Verzweigungsmittel sind Trimellitanhydrid, Pyronmellitdianhydrid, Trimethylolethan, Trimethylolpropan, Pentaerythrit.

Geeignete Blocks mit niedriger Polaritat sind hydroxyl-terminierte Butylen-EthylenCopolymere (z. B. Kraton^{®} L-2203, Fa. Shell) und hydroxylterminiertes ABA-Triblock-Polysiloxan (CoatOsil^{®} 2812 Fa Witco).

Geeignete thermoplastische Polymere sind Butylkautschuke auf Basis von 20 bis 100 % Styrol-Butadien-Styrol- bzw Styrol-Isopren-Styrol-Blockpolymerisaten, denen 0 bis 50 % eines thermoplastischen Polymerisats z. B. Polyisobutylen zugesetzt ist.

Geeignete thermoplastische Polymere sind ternäre und quarternäre Copolyamide; auch Polyamide deren Amidbindungen im Durchschnitt mindestens fünfzehn Kohlenstoffatome voneinander entfernt sind und amorphe Struktur haben, bestehend aus Dicarbonsäuren wie Adipinsäure, Azelainsäure, Sebacinsäure, Suberinsäure, Succinsäure, Glutarsäure, Isophthalsäure, Terephthalsäure, dimere Fettsäuren und Diaminen wie Ethylendiamin, 1,3-Diaminopropan, Hexamethylendiamin, Methylpentamethylendiamin, Trimethylhexamethylendiamin, 9-Aminomethylstearylamin, 10-Aminoethylstearylamin, 1,3-Di-4-piperidylpropan, Diaminodicyclohexylmethan, Methylendianilin, Bis(aminoethyl)diphenyloxid, dimere Fettsäurediamine und Etherdiamine.

Geeignete thermoplastische Polymere enthalten 10 - 50 % thermoplastishes Polyamid, 10 - 75 % Ethylen-Vinylacetat-Copolymer oder Ethylen-n-Butylacrylate-Methacrylsäure-Terpolymer, 5 - 50 % thermoplastisches Epoxyharz (Bisphenol A-basierende Harze, Epoxy-Kresol-Harz und multifunktionelle Epoxyharze mit Epoxyzahlen von 200 bis 4.000 mmol/kg).

Geeignete thermoplastische Polymere sind Polyurethane, z. B. Mischungen aus zwei amorphen Polyurethan-Prepolymeren, die sich hinsichtlich ihrer Glasübergangstemperatur unterscheiden. Polyurethane werden hergestellt aus Polyolen und Isocyanaten. Geeignete Polyole sind Copolymere aus aromatischen und/oder aliphatischen Carbonsäuren und niedermolekularen Diolen. Geeignete Carbonsäuren sind Isophthalsäure oder Terephthalsäure. Geeignete Diole sind Ethylenglycol, Butandiol, Hexandiol etc. Geeignetes Isocyanat ist 4,4'-Diphenyldiisocyanat. Die Verhältniszahl NCO zu OH ist bevorzugt 1,1 bis 6,0. Das Polyol kann ein lineares oder schwach vernetztes Polyester, Polyether oder ein anderes Hydroxylgruppenterminiertes Polymer sein. Die Glasübergangstemperatur ist bevorzugt zwischen -30 °C und 20 °C.

Geeignete Harze verbessern die Adhäsionswirkung und können auf die verschiedenen Kleberkomponenten einen verträglichkeitsvermittelnden Effekt ausüben.

Wachse werden zur Modifizierung eingesetzt. Bevorzugte Wachse sind makro- und mikrokistalline Paraffinwachse, Fischer-Tropsch-Wachse sowie Polyolefinwachse. Mit Hilfe von Metallocenkatalysatoren hergestellte Polyolefinwachse und/oder isotaktische Polypropylenpolymere sind bevorzugt.

Bevorzugte Polyolefinwachse besitzen einen Tropf- oder Erweichungspunkt zwischen 80 und 165 °C, eine Schmelzviskosität von maximal 40000 mPa·s, eine Melt flow rate von 1 bis 500 g/10 min und eine gewichtsmittlere Molmasse Mw zwischen 1.000 und 30.000 g/mol.

Geeignete Wachse sind Copolymerwachse aus Propylen und 0,1 bis 30 Gew.-% Ethylen und/oder 0,1 bis 50 Gew.-% mindestens eines verzweigten oder unverzweigten 1-Alkens mit 4 bis 20 Kohlenstoffatomen und einer Schmelzviskosität zwischen 100 bis 30.000 mPa·s, Propylenhomopolymerwachse mit einer Schmelzviskosität zwischen 100 bis 30.000 mPa·s, Ethylenhomopolymerwachse, Copolymerwachse aus Ethylen und 0,1 - 30 Gew.-% mindestens eines verzweigten oder unverzweigten 1-Alkens mit 3 bis 20 C-Atomen. Olefin-Homo- und Copolymerwachse können polar modifiziert und/oder oxidiert sein.

Geeignete isotaktische Polypropylenpolymere umfassen ein statistisches Copolymer von Propylen und einem alpha-Olefin mit der Formel R-CH=CH₂ und R ist H oder eine C₂₋₁₀-Alkylgruppe, bevorzugt Ethylen.

Geeignete Harze sind Kolophoniumharze und deren Derivate oder Kohlenwasserstoffharze. Geeignete Kolophoniumharze sind disproportioniertes, dehydriertes und/oder teilhydriertes, dimerisiertes Kolophonium, Kolophoniumaddukte, Kolophoniumester, Kolophoniumadduktester. Geeignete Harze sind aliphatische, cycloaliphatische, aromatische Kohlenwasserstoffharze (Piccotac^{®} 95 von Fa. Eastman Chemical Company, Escoreze^{®} 1310LC, Fa. ExxonMobil Chemical Company), Terpenharze, Phenolmodifizierte Terpenharze und/oder Methylabietat.

Additive für Hotmelts sind Weichmacher, Keimbildner, Vernetzer, Pigmente, Antioxidatien, Füllstoffe und Tenside. Füllstoffe sind Talk, Calciumcarbonat, Ton, Kieselsäure, Glimmer, Wollastonit, Feldspat, Aluminiumsilicat, Aluminiumoxid, Aluminiumhydroxid, Glaskugeln, Keramikkugeln, Baryt, Holzmehl. Tenside sind Fettsäureester, Alkoholethoxylate und Ethylenoxid/Propylenoxid-Copolymere.

Die Erfindung betrifft auch ein Verfahren zur Herstellung der erfindungsgemäßen flammgeschützten Klebe- und Dichtmassen, dadurch gekennzeichnet, dass das erfindungsgemäße Flammschutzmittel und Polymer miteinander gemischt werden.

Das Verfahren zur Herstellung von erfindungsgemäßen flammgeschützten Klebe-und Dichtmassen ist dadurch gekennzeichnet, dass a) mindestens eine Komponente in geschmolzenem Zustand vorgelegt, b) die weiteren Komponente zugemischt, c) die Mischung wahlweise gekühlt, d) die Mischung Strang gegossen oder pelletisiert wird.

Bevorzugte Verarbeitungstemperatur ist 20 bis 300 °C, insbesondere 50 bis 200 °C.

Der bevorzugte Druck für die Verarbeitung ist 10 bis 100.000.000 Pa.

Bevorzugte Reaktionszeit ist von 0,1 bis 100 h, besonders bevorzugt 1 bis 10 h.

Bevorzugt wird in Rührkesseln, Knetern, Feststoffmischern, Walzen oder Extrudern gemischt.

Geeignete Mischorgane bei Rührkesseln sind Anker-, Blatt-, MIG-, Propeller-, Impeller-, Turbinen-, Kreuzrührer, Dispergierscheiben, Hohl-(Begasungs) -Rührer, Rotor-Stator-Mischer, statische Mischer, Venturi-Düsen und/oder Mammutpumpen.

Geeignete Mischer sind Pflugscharmischertypen der Fa. Lödige, Ringspaltmischertypen der Fa. Lödige, (z. B. Typ CB30), Flexomix-Mischertypen der Fa. Schugi, Ringspaltmischer Typ HEC der Fa. Niro, Ringschichtmischer (z. B. Typ K-TTE4) der Fa. Drais/Mannheim, Eirich-Mischer (z. B. Typ R02), Telschig-Mischer (Typ WPA6), Hauf-Mischer (die beiden letzten arbeiten nach dem Freifallprinzip), Zig-Zag-Mischer der Fa. Niro und Mischer der Fa. Nauta, in denen das Mischgut nach dem Archimedes-Prinzip durch eine Schnecke umwälzt wird.

Walzenmischen geschieht bevorzugt in Dreiwalzen und in Mischern des Typs Werner & Pfleiderer oder Banbury-Mischern unter Wirkung hoher Scherkräfte.

Geeignete Extruder oder Compoundieraggregat sind Einschneckenextruder oder Doppelschneckenextruder wie die ZSK-Typen der Fa. Krupp Werner & Pfleiderer, Produkte der Firma Leistritz, Compex^{®}-Typen, BTS 40-Tyen (Betol Machinery Ltd). Geeignete Kneter sind z. B. Allphasenmisch- und Knetapparate, Ein- und Doppelschneckenmischer, Heizmischer, Knetmischer, Kühlmischer der Fa. List, Schweiz, Mischkneter die MDK-Typen der Firma Buss, Schweiz.

Erfindungsgemäße Formkörper, die die bevorzugte flammgeschützte Klebe- und Dichtmasse enthalten sind Laminate bestehend aus nicht klebender Trägerschicht und einer oder mehreren Klebeschichten. Mindestens eine der Schichten enthält die erfindungsgemäße flammgeschützte Klebe- und Dichtmassen.

Erfindungsgemäße Formkörper sind Klebebänder mit einer oder mehreren Klebeschicht von denen mindestens eine die erfindungsgemäße flammgeschützte Klebe- und Dichtmasse enthält und ergeben ein ein- oder doppelseitiges Klebeband.

Erfindungsgemäße wasserfestes Klebeband ist dadurch gekennzeichnet, dass zwei nicht klebende Schichten durch eine flammgeschützte Klebe- und Dichtmasse verbunden sind.

Erfindungsgemäße Formkörper bestehen aus glasgewebeverstärktem Kupferkaschiertem Substrat auf Epoxidbasis, Lötstopplack und flammgeschützter Klebe- und Dichtmasse.

Erfindungsgemäße Formkörper bestehen aus flexiblem Kupferkaschiertem Substrat, Lötstopplack und flammgeschützter Klebe- und Dichtmasse.

Erfindungsgemäße Formkörper bestehen aus Kupferkaschiertem Polyimidfilm, Lötstopplack und flammgeschützter Klebe- und Dichtmasse.

Erfindungsgemäß bevorzugt ist eine Dicke der nicht klebenden Trägerschicht, Kupferkaschiertem Substrat, flexiblem Kupferkaschiertem Substrat Leiterplatte, Kupferkaschiertem Polyimidfilm und/oder Lötstopplack von 10⁻⁹ bis 10⁻¹m.

Erfindungsgemäß bevorzugt ist eine Dicke der flammgeschützten Klebe- und Dichtmassenschicht von 10⁻⁹ bis 10⁻²m.

Erfindungsgemäß bevorzugt beträgt das Verhältnis der Dicken von nichtlebenden Trägerschicht, Kupferkaschiertem Substrat, flexiblem Kupferkaschiertem Substrat Leiterplatte, Kupferkaschiertem Polyimidfilm und/oder Lötstopplack zur Dicke der flammgeschützten Klebe- und Dichtmassenschicht von 1.000 zu 1 bis 1 zu 1.000.

Die Erfindung betrifft auch ein Verfahren zur Herstellung von Formkörpern, dadurch gekennzeichnet, dass die flammgeschützte Klebe- und Dichtmasse auf einen Trägerschichtfilm aufgebracht, eine Kupferschicht aufgepresst und gehärtet wird. Bevorzugt ist der Trägerschichtfilm aus Polyimid.

Ein weiteres Verfahren zur Herstellung von Formkörpern ist dadurch gekennzeichnet, dass die flammgeschützte Klebe- und Dichtmasse auf eine Trägerschicht aufgebracht wird und durch Bestrahlung mit Licht ausgehärtet wird. Bevorzugt ist der Trägerschichtfilm aus Polyester.

Ein anderes Verfahren zur Herstellung von flammgeschützten druckempfindlichen Klebebändern ist dadurch gekennzeichnet, dass die flammgeschützte Klebe- und Dichtmasse auf einen Trägerfilm auflaminiert wird. Bevorzugt ist der Trägerschichtfilm aus Polyethylenterephthalat.

Die Erfindung umfasst auch ein Verfahren zur Herstellung eines elektrischen Kabels, dadurch gekennzeichnet, dass Polyester zu einer nicht klebenden 100-µm Trägerschicht extrudiert wird und flammgeschützte Klebe- und Dichtmasse aufgebracht wird und ein Paar dieser Schichten auf die Ober- und Unterseite von elektrische Leiterbahnen heißgepreßt werden.

Die Erfindung umfasst auch ein Verfahren zur Herstellung eines doppelseitigen Klebebandes, dadurch gekennzeichnet, dass ein Trägermaterial auf beiden Seiten mit flammgeschützter Klebe- und Dichtmasse beschichtet wird.

Ein Verfahren zur Herstellung eines Klebebandes ist dadurch gekennzeichnet, dass bei einem einseitigen Klebeband die Kleberabgewandte Substratseite dadurch gechintzt wird, dass das Substrat durch ein Walzenpaar aus einer auf 100 bis 200 °C beheizten, schnelldrehenden (1.000-1.500 U/min) Walze und einer kalten, weichen, langsam drehenden Gegenwalze hindurchgeführt wird.

Bevorzugt sind Verfahren zu Beschichtung von Substraten mit Walzen, durch Kontaktbeschichtung mit einer Schmelzdüse, kontaktlose Beschichtung mit einer Schmelzdüse, Extrusionsbeschichtung mit einer T-Düse, Fischschwanzdüse oder Bügeldüse.

Geeignete Trägerschichten basieren auf Siliconkautschuk, Polyurethan, Polyurethanschaum, Kautschuk, Polyacrylat, Mörtel, Beton, Keramik, Porzellan, Steingut, Emaille und Glas, Metalle wie Eisen, Stahl, Aluminium und Kupfer, Messing, Gusseisen, Papier, Holz, Polyvinylchlorid, Polyesterm (z. B. PET, Polyethylennaphthalat PEN, Polybutylenterephthalat), Polyamid, Polyimid (Kapton^{®} 100H), Aramid, Polycarbonate, Polystyrol, Styrol-Blockcopolymeren, Polymethylmetacrylat, Polyvinylidenfluorid (Kynar^{®}), orientiertes Polypropylen, Polyvinylfluorid (Tedlar^{®}), glasfaserverstärkte Epoxyharze, Cellulose.

Die Erfindung umfasst auch Trägerschichten basieren auf Fasern, Vliese und Gewebe aus den genannten Materialien, Gewebe und Vliese aus mineralischen Fasern, Metallfasern oder Kunststofffasern. Die Erfindung umfasst auch Trägerschichten, basierend auf Trägerfolien aus siliconisierten, fluorierten Folien mit Releasewirkung, auf Trägerfolien aus BOPP, MOPP, PVC, PE/EVA, EPDM.

Die Erfindung betrifft schließlich auch die Verwendung der flammgeschützten Klebe-und Dichtmasse nach einem oder mehreren der Ansprüche 1 bis 14 und/oder der Formkörper nach einem oder mehreren der Ansprüche 15 bis 19 für Flachkabel, flexible Leiterplatten, Automobilinnenausrüstung, elektrische Halbleiter, Abdeckungschichten, optische Filme zum Schutz von Fenstern vor Sonneneinstrahlung, Leiterplatten, optische Leiter, Spulen zum Entmagnetisieren, zum Befestigen von elektrischen Bauelementen, zur Herstellung von elektrischen Isolationsmaterialien, Mittel- und Hochspannungsisolatoren, Kabelendverschlüsse, Kabelmuffen, zum Vergießen oder Einbetten von elektrischen oder elektronischen oder photovoltaischen Bauelementen, zum Abdichten, zur Erzeugung von Beschichtungen, zum Isolieren von elektrischen Leitern sowie zum Verkleben und Laminieren der oben genannten Substrate, Windeln, Krankenhaushygieneartikel, Damenhygieneartikel, OP-Bedarf, Inkontinenzartikel, Verkleben von Kartonagen, Verpackungsmaterialien, Klebebänder, Etiketten, Isolierglasscheiben, Verklebungen von Rohren oder Spritzgussteilen, Haftklebemassen, flexible Verklebungen von Printed Circuit Boards, Hitzeaktivierbare Haftklebebänder, zum Verguss von elektrischen bzw. elektronischen Bauteilen, als wärmehärtende Epoxy molding compounds (EMC).

Erfindungsgemäße Epoxy-Schmelzklebemassen ergeben im Winkelschälversuch Schälwiderstände von 4 bis 10 N/mm.

Erfindungsgemäße Schmelzklebemassen auf Silicon-Basis ergeben in der Haftungsprüfung Haftwerte von 10 bis 100 N/5cm.

Erfindungsgemäße Polypropylen-Schmelzklebemassen ergeben im 180°-Schälversuch Schälwiderstandswerte von 5 bis 40 g/mm.

Erfindungsgemäße Polyamid-Schmelzklebemassen ergeben im Winkelschälversuch Schälwiderstandswerte von 0,1 bis 10 N/mm.

Erfindungsgemäße Schmelzklebemassen auf Ethylen-Vinylacetat-Harz-Basis ergeben Schälwiderstandswerte von 0,1 bis 4 N/mm.

Erfindungsgemäße flammgeschützte Klebe- und Dichtmassen (adhäsives Polymer und Flammschutzmittel) ergeben im Winkelschälversuch Schälwiderstände von 0,1 - 10 N/mm und im 180°-Schälversuch Schälwiderstände von 0,1 - 10 N/mm.

### Beispiel 1 (Vergleich)

Erfindungsgemäße Epoxy-Schmelzklebemassen werden hergestellt, indem 75 % Epoxidharz (DER^{®} 662, Fa. Dow Chemical), 10 % Ethylenmischpolymer (Lotader^{®} AX8900, Fa. Elf-Atochem), 10 % Polyesterharz (Tone^{®} 767, Fa. Union Carbide) und 5 % Härter (Dyhard^{®} 100S, Fa. Degussa) in einem Doppelschneckenextruder bei einer Schmelztemperatur von 110 bis 120°C bei einer Verweilzeit von unter zwei Minuten geknetet und danach mit einem Unterwassergranulator zu Pellets von 2-3 mm verarbeitet werden. Aus der Masse werden UL-94-Teststäbe von 1,6 mm Dicke als Formkörper Spritzgegossen. Die Testergebnisse sind in Tabelle 1 aufgeführt.
Andere Formkörper können hergestellt werden, indem die flammgeschützte Klebe-und Dichtmasse auf ca. 100 °C geschmolzen und auf Metalloberflächen aufgebracht wird um dort zu haften.

An zwei entfetteten Stahlproben wird der Winkelschälversuch durchgeführt, indem sie durch einen 1 bis 1,5 mm dicken, 25 mm breiten und 100 mm langen Klebefilm verklebt werden und dann 25min bei 200°C gehärtet werden. Die Klebeschicht ist 0,5 mm dick. Bei einer Traversengeschwindigkeit von 10 mm/min wird ein Schälwiderstand von 6,8 N/mm bestimmt.

### Beispiel 2 (Vergleich)

Nach dem gleichen Verfahren wie in Beispiel 1 beschrieben wird eine flammgeschützte Klebe- und Dichtmasse (Epoxy-Schmelzklebemassen) aus 10 % Ammoniumpolyphosphat (P^{®}-30 Regular Grad, Fa. Astaris, Zersetzung ab 250 °C), 67,5 % Epoxidharz, 9 % Ethylenmischpolymer, 9 % Polyesterharz, 4,5% Härter hergestellt und UL-94-Teststäbe von 1,6 mm Dicke als Formkörper spritzgegossen. Im Klimatest (80 °C bei 95 % rel. Luftfeuchte) bilden sich starke weiße Ausblühungen.

### Beispiel 3

Nach dem gleichen Verfahren, wie in Beispiel 1 beschrieben, wird eine flammgeschützte Klebe- und Dichtmasse (Epoxy-Schmelzklebemasse) aus 10 % Diethylphosphinat 1, 67,5 % Epoxidharz, 9 % Ethylenmischpolymer, 9 % Polyesterharz, 4,5 % Härter hergestellt und UL-94-Teststäbe von 1,6 mm Dicke als Formkörper spritzgegossen. Die Testergebnisse sind in Tabelle 1 aufgeführt. Im Klimatest (80 °C bei 95 % rel. Luftfeuchte) werden keine Ausblühungen beobachtet. Andere Formkörper können hergestellt werden indem die flammgeschützte Klebe-und Dichtmasse auf ca. 100 °C geschmolzen und auf Metalloberflächen aufgebracht wird um dort zu haften.
An zwei entfetteten Stahlproben wird der Winkelschälversuch durchgeführt. Es wird ein Schälwiderstand von 5,7 N/mm bestimmt.

### Beispiel 4 (Vergleich)

Mischung 1: 2.600 g eines alpha-omega-Divinylpolydimethylsiloxans werden bei 25 °C in einem Kneter (Fa. Werner & Pfleiderer) durchgearbeitet. Nach 20 min Knetzeit werden 4,2 g eines Divinyltetramethylplatinkomplexes mit einem Platingehalt von 1 Gew.-% zugegeben und 15 min geknetet. Anschließend werden 2,05 g Ethinylcyclohexanol und 58 g des Silans (EtO)₃Si-CH₂CH₂CH₂-cyclo-(-CH-CO-O-CO-CH₂-) zugegeben und weitere 15 min geknetet.

Mischung 2: 2.530 g eines alpha-omega-Divinylpolydimethylsiloxans werden bei 25 °C in einem Kneter (Fa. Werner & Pfleiderer) durchgearbeitet. Nach 30 min werden 876 g eines Siloxans der Formel Me₃SiO(Me₂SiO)₉₀(HMeSiO)₃₀SiMe₃ zugegeben und weitere 15 min geknetet. Nach Zugabe von 0,5 g Ethinylcyclohexanol wird für die Dauer von 15 min geknetet.

Mischung 1 und 2 werden im Gewichtsverhältnis eins zu eins vermischt und in 5 min bei 170°C in plattenförmige Formkörper einer flammgeschützten Klebe- und Dichtmasse (Schmelzklebemasse) von 1,6 mm Dicke vulkanisiert. Daraus werden UL-94-Teststäbe als Formkörper herausgeschnitten. Die Testergebnisse sind in Tabelle 1 aufgeführt. Die Haftungsprüfung von verklebten 25 mm breiten und 150 mm langen Polyestergeweben mit einer Zugmaschine bei 100 mm/min Vorschubgeschwindigkeit ergibt einen Haftwert von 64 N/5cm.

### Beispiel 5

Nach dem in Beispiel 4 beschriebenen Verfahren wird eine Schmelzklebemasse hergestellt, indem für die Mischung 1 31 g Diethylphosphinat 2 in kleinen Portionen zunächst in 2.600 g alpha-omega-Divinylpolydimethylsiloxan eingearbeitet und weiter analog vorgegangen. Für die Mischung 2 werden 31 g Diethylphosphinat 2 kleinen Portionen in 2.530 g alpha-omega-Divinylpolydimethylsiloxan eingearbeitet und weiter analog vorgegangen. Die Testergebnisse sind in Tabelle 1 aufgeführt. Die Haftungsprüfung von verklebten Polyestergeweben ergibt einen Haftwert von 58 N/5cm.

### Beispiel 6 (Vergleich)

In einem gerührten Laborreaktor mit Heizmantel und Thermometer werden unter Schutzgasatmosphäre 30 % ataktisches homo-Polypropylen (Eiastoflex^{®} P1010, Fa. Eastman Chemical), 10 % flüssiges aliphatisches C₅-Kohlenwasserstoffharz (Wingtack^{®} 10, Fa. Goodyear Chemicals), 46,5 % aliphatisches C₅-Kohlenwasserstoffharz (Hercotac^{®} 1148, Fa. Eastman Chemical) 5 % Mineralölweichmacher (Nyplast^{®} 222B, Fa. Nysas Canada Inc), 0,5 % Antioxidans (Irganox^{®} 1010, Fa. Ciba SC) auf 175 - 190 °C erhitzt und nach dem Schmelzen der Komponenten gerührt. Dann werden 8 % isotaktisches Propylen-Ethylen-Copolymer (EOD^{®}01-06, Fa. AtoFina Petrochemicals) zugegeben und gut untergemischt. Es werden 2 kg flammgeschützte Klebe- und Dichtmasse (Polypropylen-Schmelzklebemasse) erhalten. Daraus werden plattenförmige Formkörper von 1,6 mm Dicke gegossen und UL-94-Teststäbe als Formkörper herausgeschnitten. Die Testergebnisse sind in Tabelle 1 aufgeführt.
Im 180°-Schälversuch wird an einem Probekörper aus einem 1 mm dicken PE-Film und einem Polypropylenvlies bei 30 cm/min Traversengeschwindigkeit ein Schälwiderstand von 16,2 g/mm gemessen. Andere Formkörper können hergestellt werden, indem mit der Masse Elastikstreifen aus Lycra^{®} 740, Polyethylenfilm, oder Polypropylen-Spunbond, bzw. Wellpappe beschichtet werden.

### Beispiel 7

Nach dem in Beispiel 6 beschriebenen Verfahren werden aus 30 % Diethylphosphinat 2, 21 % ataktischem homo-Polypropylen, 7 % flüssigem aliphatisches C₅-Kohlenwasserstoffharz, 32,6 % aliphatisches C₅-Kohlenwasserstoffharz, 3,5 % Mineralölweichmacher, 0,4 % Antioxidant, 5,5 % isotaktisches Propylen-Ethylen-Copolymer 2 kg flammgeschützte Klebe- und Dichtmasse (Polypropylen-Schmelzklebemasse) erhalten. Daraus werden plattenförmige Formkörper von 1,6 mm Dicke gegossen und UL-94-Teststäbe als Formkörper herausgeschnitten. Die Testergebnisse sind in Tabelle 1 aufgeführt. Im 180°-Schälversuch wird ein Schälwiderstand von 14,8 g/mm gemessen.
Andere Formkörper können hergestellt werden, indem mit der Masse werden Elastikstreifen aus Lycra^{®} 740, Polyethylenfilm, oder Polypropylen-Spunbond, bzw. Wellpappe beschichtet werden.

### Beispiel 8 (Vergleich)

In einem gerührten Laborreaktor mit Heizmantel und Thermometer werden unter Schutzgasatmosphäre 10 % Mineralölweichmacher (Pennznap^{®}500, Fa. Pennzoil Products), 15 % synthetisches Polyethylenwachs (Marcus^{®} 300, Marcus Oil&Chemicals), 44 % hydriertes aliphatisches C₅-Kohlenwasserstoffharz (Eastotac^{®} H100W, Eastman Chemical Company) auf 190 °C erhitzt und nach dem Schmelzen der Komponenten gerührt. Dann werden 30 % flexibles Polypropylen-Homopolymer (RexFlex^{®} W121) zugegeben und gut untergemischt. Es werden 2 kg flammgeschützte Klebe- und Dichtmasse (Polypropylen-Schmelzklebemasse) erhalten und daraus plattenförmige Formkörper von 1,6mm Dicke gegossen und UL-94-Teststäbe als Formkörper herausgeschnitten. Die Testergebnisse sind in Tabelle 1 aufgeführt.

Im 180°-Schälversuch wird an einem Probekörper aus einem 1 mm dicken PE-Film und einem Polypropylenvlies bei 30 cm/min Traversengeschwindigkeit ein Schälwiderstand von 23,2 g/mm gemessen. Andere Formkörper können hergestellt werden, indem mit der Masse Elastikstreifen aus Lycra^{®} 740, Polypropylen-Vlies oder Polyethylenfilm bzw. Wellpappe beschichtet werden.

### Beispiel 9

Nach dem in Beispiel 8 beschriebenen Verfahren werden aus 30 % Diethylphosphinat 2, 7 % Mineralölweichmacher, 15 % synthetisches Polyethylenwachs, 31,5 % hydriertes aliphatisches C₅-Kohlenwasserstoffharz und 21 % flexibles Polypropylen-Homopolymer 2 kg flammgeschützte Klebe- und Dichtmasse (Polypropylen-Schmelzklebemasse) erhalten und daraus plattenförmige Formkörper von 1,6 mm Dicke gegossen und UL-94-Teststäbe als Formkörper herausgeschnitten. Die Testergebnisse sind in Tabelle 1 aufgeführt. Im 180°-Schälversuch wird ein Schälwiderstand von 25,5 g/mm gemessen. Andere Formkörper können hergestellt werden, indem mit der Masse Elastikstreifen aus Lycra^{®} 740, Polypropylen-Vlies oder Polyethylenfilm bzw. Wellpappe beschichtet werden.

### Beispiel 10 (Vergleich)

31,5 % Polyamid (Macromelt^{®} 6301, Fa Henkel), 3,5 % Copolyamid (Eurelon^{®} 100, Fa Huntsman), 35 % Ethylen-n-Butylacrylat-Methacrylsäure-Terpolymer (BYNEL^{®} CXA 2002, Fa. DuPont) und 30 % Epoxidharz (Epicote^{®} 1004, Shell Chemie) werden kryogengemahlen und durch ein Sieb mit 300 µm Durchmesser gesiebt. Überkorn wird in die Mahlung zurückgeführt. Aus 2 kg der flammgeschützte Klebe- und Dichtmasse (Polyamid-Schmelzklebemasse) werden plattenförmige Formkörper von 1,6 mm Dicke gegossen und UL-94-Teststäbe als Formkörper herausgeschnitten. Die Testergebnisse sind in Tabelle 1 aufgeführt. Im Winkelschälversuch wird an einem Polyethylenprobekörper mit einer 6,25 cm breiten, 12,5 cm langen und 0,625 mm dicken Klebefläche und 5 cm/min Traversengeschwindigkeit ein Schälwiderstand von 3,4 N/mm gemessen.

### Beispiel 11

Nach dem in Beispiel 10 beschriebenen Verfahren werden aus 20 % Diethylphosphinat 2, 25,2 % Polyamid, 2,8 % Copolyamid, 28 % Ethylen-n-Butylacrylat-Methacrylsäure-Terpolymer und 24 % Epoxidharz 2 kg flammgeschützte Klebe- und Dichtmasse (Polyamid-Schmelzklebemasse) erhalten und plattenförmige Formkörper von 1,6 mm Dicke gegossen und UL-94-Teststäbe als Formkörper herausgeschnitten. Die weiteren Testergebnisse sind in Tabelle 1 aufgeführt.
Im Winkelschälversuch wird ein Schälwiderstand von 3,6 N/mm gemessen.

### Beispiel 12 (Vergleich)

Eine flammgeschützte Klebe- und Dichtmasse (Schmelzklebemasse) wird hergestellt, indem 47,3 % Ethylen-Vinylacetat-Harz (Elvax^{®}, Fa. DuPont), 47,3 % dehydratisiertes/teilhydratisiertes Kolophonium (Resin^{®} 835A, Abieta Chemie GmbH), 5 % mit Metallocen hergestelltem Propylen-Ethylen-Copolymerwachs (Fa. Clariant) und 0,4g Antioxidans (Hostanox^{®} O 10, Fa. Clariant) in einem Becherglas aufgeschmolzen und eine Stunde bei 180 °C gerührt werden. Daraus werden plattenförmige Formkörper von 1,6 mm Dicke gegossen und UL-94-Teststäbe als Formkörper herausgeschnitten. Die weiteren Testergebnisse sind in Tabelle 1 aufgeführt.

Im Winkelschälversuch wird an einem 25 cm langen und 1 cm breiten Aluminiumprüfkörper ein Schälwiderstand von 1,4 N/mm gemessen.
Andere Formkörper können hergestellt werden, indem Aluminiumfolien mit der flammgeschützten Klebe- und Dichtmasse beschichtet und verklebt werden.

### Beispiel 13

Nach dem Verfahren wie in Beispiel 12 beschrieben werden aus 30 % Diethylphosphinat 3, 33,1 % Ethylen-Vinylacetat-Harz, 33,1 % dehydratisiertes/teilhydratisiertes Kolophonium, 3,5 % mit Metallocen hergestelltem Propylen-Ethylen-Copolymerwachs und 0,3 % Antioxidans eine flammgeschützte Klebe- und Dichtmasse (Schmelzklebemasse) hergestellt. Daraus werden plattenförmige Formkörper von 1,6 mm Dicke gegossen und UL-94-Teststäbe als Formkörper herausgeschnitten. Die Testergebnisse sind in Tabelle 1 aufgeführt.
Im Winkelschälversuch wird ein Schälwiderstand von 1,3 N/mm gemessen.

### Beispiel 14

Nach dem Verfahren wie in Beispiel 12 beschrieben werden aus 4,75 % Diethylphosphinat 1, 0,25 % Diethylphosphinat 3, 44,9 % Ethylen-Vinylacetat-Harz, 44,9 % dehydratisiertes/teilhydratisiertes Kolophonium, 4,8 % mit Metallocen hergestelltem Propylen-Ethylen-Copolymerwachs und 0,4 % Antioxidans eine flammgeschützte Klebe- und Dichtmasse (Schmelzklebemasse) hergestellt. Daraus werden plattenförmige Formkörper von 1,6mm Dicke gegossen und UL-94-Teststäbe als Formkörper herausgeschnitten. Die Testergebnisse sind in Tabelle 2 aufgeführt. Im Winkelschälversuch wird ein Schälwiderstand von 1,7 N/mm gemessen.

### Beispiel 15

Nach dem in Beispiel 4 beschriebenen Verfahren wird eine Schmelzklebemasse hergestellt, indem für die Mischung 1 683 g Diethylphosphinat 2 und 76 g Zinkborat in kleinen Portionen zunächst in 2.600 g alpha-omega-Divinylpolydimethylsiloxan eingearbeitet und weiter analog vorgegangen wird. Für die Mischung 2 werden 683 g Diethylphosphinat 2 und 76g Zinkborat kleinen Portionen in 2.530g alpha-omega-Divinylpolydimethylsiloxan eingearbeitet und weiter analog vorgegangen. Die Testergebnisse sind in Tabelle 2 aufgeführt. Die Haftungsprüfung von verklebten Polyestergeweben ergibt einen Haftwert von 65 N/5cm.

### Beispiel 16

Nach dem gleichen Verfahren, wie in Beispiel 1 beschrieben, wird eine flammgeschützte Klebe- und Dichtmasse (Epoxy-Schmelzklebemasse) aus 16 % Diethylphosphinat 2, 4 % Borphosphat, 60 % Epoxidharz, 8 % Ethylenmischpolymer, 8 % Polyesterharz, 4 % Härter hergestellt und UL-94-Teststäbe von 1,6 mm Dicke als Formkörper spritzgegossen. Die weiteren Testergebnisse sind in Tabelle 2 aufgeführt.
An zwei entfetteten Stahlproben wird der Winkelschälversuch durchgeführt. Es wird ein Schälwiderstand von 6,2 N/mm bestimmt. Andere Formkörper können hergestellt werden indem die flammgeschützte Klebe- und Dichtmasse auf ca. 100 °C geschmolzen und auf Metalloberflächen aufgebracht wird um dort zu haften.

### Beispiel 17

Nach dem in Beispiel 8 beschriebenen Verfahren werden aus 7 % Diethylphosphinat 2, 3 % Melaminpolyphosphat, 9 % Mineralölweichmacher, 13,5 % synthetisches Polyethylenwachs, 40,5 % hydriertes aliphatisches C₅-Kohlenwasserstoffharz und 27 % flexibles Polypropylen-Homopolymer 2 kg flammgeschützte Klebe- und Dichtmasse (Polypropylen-Schmelzklebemasse) erhalten und daraus plattenförmige Formkörper von 1,6mm Dicke gegossen und UL-94-Teststäbe als Formkörper herausgeschnitten. Die Testergebnisse sind in Tabelle 2 aufgeführt. Im 180°-Schälversuch wird ein Schälwiderstand von 18,7 g/mm gemessen. Andere Formkörper können hergestellt werden, indem mit der Masse Elastikstreifen aus Lycra^{®} 740, Polypropylen-Vlies oder Polyethylenfilm bzw. Wellpappe beschichtet werden.

### Beispiel 18

Nach dem gleichen Verfahren, wie in Beispiel 1 beschrieben, wird eine flammgeschützte Klebe- und Dichtmasse (Epoxy-Schmelzklebemasse) aus 12 % Diethylphosphinat 2, 8 % Melamincyanurat, 15 % Epoxidharz, 2 % Ethylenmischpolymer, 2 % Polyesterharz, 1 % Härter hergestellt und UL-94-Teststäbe von 1,6 mm Dicke als Formkörper spritzgegossen. Die weiteren Testergebnisse sind in Tabelle 2 aufgeführt. An zwei entfetteten Stahlproben wird der Winkelschälversuch durchgeführt. Es wird ein Schälwiderstand von 5,6 N/mm bestimmt. Andere Formkörper können hergestellt werden indem die flammgeschützte Klebe- und Dichtmasse auf ca. 100 °C geschmolzen und auf Metalloberflächen aufgebracht wird um dort zu haften.

### Beispiel 19

Nach dem Verfahren wie in Beispiel 12 beschrieben werden aus 15 % Diethylphosphinat 2, 15 % Aluminiumphosphat, 33,1% Ethylen-Vinylacetat-Harz, 33,1 % dehydratisiertes/teilhydratisiertes Kolophonium, 3,5 % mit Metallocen hergestelltem Propylen-Ethylen-Copolymerwachs und 0,3 % Antioxidans eine flammgeschützte Klebe- und Dichtmasse (Schmelzklebemasse) hergestellt. Daraus werden plattenförmige Formkörper von 1,6 mm Dicke gegossen und UL-94-Teststäbe als Formkörper herausgeschnitten. Die weiteren Testergebnisse sind in Tabelle 2 aufgeführt. Im Winkelschälversuch wird ein Schälwiderstand von 1,3 N/mm gemessen.

### Beispiel 20

Nach dem in Beispiel 6 beschriebenen Verfahren werden aus 3 % Diethylphosphinat 1, 27 % Piperazinpyrophosphat, 21 % ataktischem homo-Polypropylen, 7 % flüssigem aliphatisches C₅-Kohlenwasserstoffharz, 32,6 % aliphatisches C₅-Kohlenwasserstoffharz, 3,5 % Mineralölweichmacher, 0,4 % Antioxidant, 5,5 % isotaktisches Propylen-Ethylen-Copolymer 2 kg flammgeschützte Klebe- und Dichtmasse (Polypropylen-Schmelzklebemasse) erhalten. Daraus werden plattenförmige Formkörper von 1,6mm Dicke gegossen und UL-94-Teststäbe als Formkörper herausgeschnitten. Die Testergebnisse sind in Tabelle 2 aufgeführt. Im 180°-Schälversuch wird ein Schälwiderstand von 15,1 g/mm gemessen.
Andere Formkörper können hergestellt werden, indem mit der Masse werden Elastikstreifen aus Lycra^{®} 740, Polyethylenfilm, oder Polypropylen-Spunbond, bzw. Wellpappe beschichtet werden.

### Beispiel 21

Nach dem in Beispiel 10 beschriebenen Verfahren werden aus 12 % Diethylphosphinat 2, 1 % Zinkborat, 7 % Melaminpolyphosphat, 25,2 % Polyamid, 2,8 % Copolyamid, 28 % Ethylen-n-Butylacrylat-Methacrylsäure-Terpolymer und 24 % Epoxidharz 2 kg flammgeschützte Klebe- und Dichtmasse (Polyamid-Schmelzklebemasse) erhalten und plattenförmige Formkörper von 1,6 mm Dicke gegossen und UL-94-Teststäbe als Formkörper herausgeschnitten. Die Testergebnisse sind in Tabelle 2 aufgeführt.
Im Winkelschälversuch wird ein Schälwiderstand von 3,4 N/mm gemessen.

### Beispiel 22

Nach dem in Beispiel 6 beschriebenen Verfahren werden aus 16,25 % Diethylphosphinat 1, 6,25 % Melaminpolyphosphat, 2,5 % Zinkoxid, 22,5 % ataktischem homo-Polypropylen, 7,5% flüssigem aliphatisches C₅-Kohlenwasserstoffharz, 34,8 % aliphatisches C₅-Kohlenwasserstoffharz, 3,8 % Mineralölweichmacher, 0,4 % Antioxidant, 6 % isotaktisches Propylen-Ethylen-Copolymer 2 kg flammgeschützte Klebe- und Dichtmasse (Polypropylen-Schmelzklebemasse) erhalten. Daraus werden plattenförmige Formkörper von 1,6 mm Dicke gegossen und UL-94-Teststäbe als Formkörper herausgeschnitten. Die Testergebnisse sind in Tabelle 2 aufgeführt. Im 180°-Schälversuch wird ein Schälwiderstand von 16,3 g/mm gemessen.
Andere Formkörper können hergestellt werden, indem mit der Masse werden Elastikstreifen aus Lycra^{®} 740, Polyethylenfilm, oder Polypropylen-Spunbond, bzw. Wellpappe beschichtet werden.

### Beispiel 23

Nach dem Verfahren wie in Beispiel 12 beschrieben werden aus 14 % Diethylphosphinat 1, 14 % Melaminpolyphosphat, 30,7 % Ethylen-Vinylacetat-Harz, 30,7 % dehydratisiertes/teilhydratisiertes Kolophonium, 3,3 % mit Metallocen hergestelltem Propylen-Ethylen-Copolymerwachs und 0,3 % Antioxidans eine flammgeschützte Klebe- und Dichtmasse (Schmelzklebemasse) hergestellt. Daraus werden plattenförmige Formkörper von 1,6 mm Dicke gegossen und UL-94-Teststäbe als Formkörper herausgeschnitten. Die Testergebnisse sind in Tabelle 2 aufgeführt.
Im Winkelschälversuch wird ein Schälwiderstand von 1,3 N/mm gemessen.

### Beispiel 24

Es werden 22 Gew.-% eines Terpolymers, das seinerseits zu 94 Gew.-% aus Isooctylacrylat, zu 6 Gew.-% aus Acrylsäure und zu 0,25 Gew.-% aus 2,3-Epoxypropylmethacrylat besteht, 15 Gew.-% Diethylphosphinat 2, 7 Gew.-% Melaminpolyphosphat, 11 Gew.-% Titandioxid und 67 Gew.-% eines Gemisches aus Heptan und Ethylacetat nassgemahlen. Die flammgeschützte Klebe- und Dichtmasse wird auf eine 25 µm dicke PET-Trägerfolie gestrichen und 5 min bei 110°C getrocknet. Der Auftrag an flammgeschützter Klebe- und Dichtmasse (adhäsivem Polymer und Flammschutzmittel) beträgt nach dem Trocknen 50 g/qm. Durch Zuschneiden und Aufrollen wird ein Klebeband erhalten. Aus der flammgeschützten Klebe- und Dichtmasse werden plattenförmige Formkörper von 1,6 mm Dicke gegossen und UL-94-Teststäbe als Formkörper herausgeschnitten. Die Testergebnisse sind in Tabelle 3 aufgeführt. Der Schälwiderstand beträgt 40 g/mm.

### Beispiel 25

Es werden 7 Gew.-% Naturkautschuk (Fa. Goodyear), 4,4 Gew.-% Harz (Piccolyte^{®} S115, Fa Hercules), 0,7 % Zinkresinat (Zirex^{®}, Fa. Reichhol Chem), 0,8 Gew.-% Phenolharz (UCAR^{®} CK 1634, Fa. Union Carbide), 0,1 Gew.-% Antioxidans (Irganox^{®} 1010, Fa. Ciba Geigy), 1 Gew.-% Titandioxid (Titanox^{®} 2020, Fa. NL Industries), 2 Gew.-% Diethylphosphinat 2 und 84 Gew.-% Toluol in einer Kugelmühle 2 h dispergiert. Die flammgeschützte Klebe- und Dichtmasse (adhäsivem Polymer und Flammschutzmittel) wird dann auf einen 30 µm dicken PET-Film gerakelt und dann in einem Ofen bei 90 °C während 8 min getrocknet. Aus der flammgeschützten Klebe- und Dichtmasse werden plattenförmige Formkörper von 1,6 mm Dicke gegossen und UL-94-Teststäbe als Formkörper herausgeschnitten. Die Testergebnisse sind in Tabelle 3 aufgeführt.

Im Winkelschälversuch von einem Aluminiumprobekörper wird ein Schälwiderstand von 0,4 N/mm gemessen.

### Beispiel 26

Es wird eine homogene Suspension von 9,0 Gew.-% Diethylphosphinat 3, 11,4 Gew.-% Styrol-Isopren-Styrol-Block-Copolymer (Kraton^{®} 1107CS, Fa. Shell), 15,3 Gew.-% Harz 1 (Escorez^{®} 1310, Fa Exxon), 7,6 Gew.-% Harz 2 (Zonarez^{®} Alpha 24, Fa. Arizona Chemical), 0,3 Gew.-% Antioxidans (Irganox^{®} 1076, Fa. Ciba SV), 17,7 Gew.-% Toluol und 38,7 Gew.-% Heptan hergestellt, indem die Komponenten 1 min bei 150 Upm und 24 h bei 200 Upm gerührt werden. Eine Trennfolie wird mit der Lösung der flammgeschützten Klebe- und Dichtmasse (adhäsivem Polymer und Flammschutzmittel) beschichtet und zunächst 5 min bei 30 °C und dann 15 min bei 80 °C in einem Umluftofen getrocknet. Die flammgeschützte Klebe- und Dichtmasse wird zwischen einen 2 mm dicken, 70 mm breiten und 30 mm langen Probekörper aus Polyethylenschaum und eine 25 µm dicke Aluminiumfolie gepresst.
Aus der Lösung der flammgeschützten Klebe- und Dichtmasse werden plattenförmige Formkörper von 1,6 mm Dicke gegossen und UL-94-Teststäbe als Formkörper herausgeschnitten. Die Testergebnisse sind in Tabelle 3 aufgeführt. Im 180°-Schälversuch wird ein Schälwiderstand von 1,6 N/mm gemessen.

### Beispiel 27

Zu einer Lösung 1 werden 3,5 Gew.-% Naturkautschuk (Cariflex^{®} IR, Fa. Shell), 1,9 Gew.-% Styrol-Butadienkautschuk (Cariflex^{®} S, Fa. Shell), 15 Gew.-% Diethylphosphinat 2, 6,6 Gew.-% Harz (Escorez^{®} 1304, Fa. Exxon Chemicals), 0,3 Gew.-% Antioxidans (Irganox^{®} 1076, Fa. Ciba SV) in 72,7 Gew.-% Toluol gelöst.

Zu einer Lösung 2 werden 2,9 Gew.-% Naturkautschuk (Cariflex^{®} IR, Fa. Shell), 1,3 Gew.-% Styrol-Butadienkautschuk Cariflex S, Fa. Shell), 16 Gew.-% Diethylphosphinat 2, 5,0 Gew.-%Harz (Escorez^{®} 1304, Fa. Exxon Chemicals), 0,4 Gew.-% Antioxidans (Irganox^{®} 1076, Fa. Ciba SV), 0,04 Gew.-% Titanox 2020 Titandioxid Pigment (Fa. NL Industries), in 74,36 Gew.-% Toluol gelöst.

Ein Acetatgewebe mit Kettfäden von 83 dtex und 180 Fäden/inch und Schussfäden von 166 dtex und 53 Fäden/inch wurde zunächst mit soviel Lösung 1 imprägniert und getrocknet, dass 12 g/qm Aktivsubstanz aufgetragen werden. Dann wird soviel Lösung 2 aufgebracht und getrocknet, dass zusätzlich 200 g Aktivsubstanz von adhäsivem Polymer aufgetragen werden.
Das Gewebe wird aufgerollt und zu Rollen mit 12 mm Breite geschnitten und ergibt ein flammgeschütztes Klebeband.
Aus den Lösungen 1 und 2 der flammgeschützten Klebe- und Dichtmasse (adhäsivem Polymer und Flammschutzmittel) werden plattenförmige Formkörper von 1,6 mm Dicke gegossen und UL-94-Teststäbe als Formkörper herausgeschnitten. Die Testergebnisse sind in Tabelle 3 aufgeführt.
Im Winkelschälversuch auf einem Probekörper wird ein Schälwiderstand von 6,8 N/12 mm gemessen.

### Beispiel 28

Es wird eine Lösung aus 20 Gew.-% Styrol-Isopren-Styrol-Triblockpolymer (Typ Kraton^{®} 1107 S-1-S, Fa. Shell), 4 Gew.-% Diethylphosphinat 2 (Fa. Clariant), 0,2 Gew.-% Antioxidans (Irganox^{®} 1010, Fa. Ciba SV), 16,1 Gew.-% Olefinharz (Escorez^{®} 1304 Fa. Exxon), 4 Gew.-% Polystyrolharz (Piccolastic^{®} D-150, Fa. Hercules), 1 Gew.-% Zinkoxid, 0,2 Gew.-% Vernetzer (Tetrone^{®} A, Fa. DuPont), 0,4 Gew.-% Beschleuniger (Butyl^{®} 8, Fa. R.T. Vanderbilt) und 54,1 Gew.-% Toluol hergestellt. Die Lösung von flammgeschützten Klebe- und Dichtmasse (adhäsivem Polymer und Flammschutzmittel) wird auf ein Aluminiumfolie-Schutzträgermaterial beschichtet und je 5 min bei Raumtemperatur und 70 °C getrocknet. Die Schichtdicke beträgt 50 µm.
Aus der Lösung der flammgeschützten Klebe- und Dichtmasse werden plattenförmige Formkörper von 1,6mm Dicke gegossen und UL-94-Teststäbe als Formkörper herausgeschnitten. Die Testergebnisse sind in Tabelle 3 aufgeführt.
Im 180°-Schälversuch wird ein Schälwiderstand von 6,1 N/mm gemessen.

### Beispiel 29

Eine Klebemasse wird aus 83 Gew.-% lösemittelhaltigem Polyetherbasierenden Polyurethankleber (PSA^{®} 2-25-3, Fa. Mace Adhesives) und 1,7 Gew.-% Vernetzer (XR^{®}-2000, Fa Stahl) und 15 Gew.-% Diethylphosphinat 3 (Fa. Clariant) hergestellt. Diese flammgeschützte Klebe- und Dichtmasse (adhäsivem Polymer und Flammschutzmittel) wird in 20 µm Schichtdicke auf eine 200 µm dicke Polyether-Polyurethan-Folie aufgebracht.
Aus der Lösung der flammgeschützten Klebe- und Dichtmasse werden plattenförmige Formkörper von 1,6mm Dicke gegossen und UL-94-Teststäbe als Formkörper herausgeschnitten. Die Testergebnisse sind in Tabelle 3 aufgeführt.
Im 180°-Schälversuch wird ein Schälwiderstand von 0,3 N/mm gemessen.

**Tabelle 1: Einsatzmengen und Ergebnisse der Experimente**

| Beispiel | 1 | 3 | 4 | 5 | 6 | 7 | 8 | 9 | 10 | 11 | 12 | 13 |
|---|---|---|---|---|---|---|---|---|---|---|---|---|
| Diethylphosphinat 1 | | 10 | | | | | | | | | | |
| Diethylphosphinat 2 | | | | 1 | | 30 | | 30 | | 20 | | |
| Diethylphosphinat 3 | | | | | | | | | | | | 30 |
| Zinkborat | | | | | | | | | | | | |
| Borphosphat | | | | | | | | | | | | |
| Melaminpolyphosphat | | | | | | | | | | | | |
| Melamincyanurat | | | | | | | | | | | | |
| Aluminiumphosphat | | | | | | | | | | | | |
| Piperazinpyrophosphat | | | | | | | | | | | | |
| Zinkoxid | | | | | | | | | | | | |
| Zinkstearat | | | | | | | | | | | | |
| Rest (thermoplastisches Polymer) | 100 | 90 | 100 | 99 | 100 | 70 | 100 | 70 | 100 | 80 | 100 | 70 |
| UL-94 Klassifikation | nkl | V-0 | V-1 | V-0 | nkl | V-0 | nkl | V-0 | nkl | V-0 | nkl | V-0 |

**Tabelle 2: Einsatzmengen und Ergebnisse der Experimente**

| Beispiel | 14 | 15 | 16 | 17 | 18 | 19 | 20 | 21 | 22 | 23 |
|---|---|---|---|---|---|---|---|---|---|---|
| Diethylphosphinat 1 | 4,75 | | | | | | 3 | | 16,25 | 14 |
| Diethylphosphinat 2 | | 18 | 16 | 7 | 12 | 15 | | 12 | | |
| Diethylphosphinat 3 | 0,25 | | | | | | | | | |
| Zinkborat | | 2 | | | | | | 1 | | |
| Borphosphat | | | 4 | | | | | | | |
| Melaminpolyphosphat | | | | 3 | | | | 7 | 6,25 | 14 |
| Melamincyanurat | | | | | 8 | | | | | |
| Aluminiumphosphat | | | | | | 15 | | | | |
| Piperazinpyrophosphat | | | | | | | 27 | | | |
| Zinkoxid | | | | | | | | | 2,5 | |
| Zinkstearat | | | | | | | | | | 7 |
| Rest (thermoplastisches Polymer) | 95 | 80 | 80 | 90 | 80 | 70 | 70 | 80 | 75 | 65 |
| UL-94 Klassifikation | V-1 | V-0 | V-0 | V-0 | V-0 | V-0 | V-0 | V-0 | V-0 | V-0 |

**Tabelle 3: Einsatzmengen und Ergebnisse der Experimente**

| | | | | | | |
|---|---|---|---|---|---|---|
| Beispiel | 24 | 25 | 26 | 27 | 28 | 29 |
| Diethylphosphinat 1 | | | | | | |
| Diethylphosphinat 2 | 15 | 2 | | | 4 | |
| Diethylphosphinat 3 | | | 9 | 15/16 | | 15 |
| Melaminpolyphosphat | 7 | | | | | |
| Rest (adhäsives Polymer plus Lösungsmittel) | 54 | 73 | 65 | 85/84 | 68 | 56 |
| UL-94 Klassifikation | V-0 | V-0 | V-0 | V-0 | V-0 | V-0 |

**Tabelle 4: Verwendete Chemikalien**

| | |
|---|---|
| Diethylphosphinat 1 | Exolit OP1230, mittl. Teilchengröße 22 µm, Fa. Clariant |
| Diethylphosphinat 2 | Exolit OP935, mittl. Teilchengröße 3 µm, Fa. Clariant |
| Diethylphosphinat 3 | Exolit OP950, mittl. Teilchengröße 150 µm, Fa. Clariant |
| Zinkborat | Firebrake 500, Fa. Borax |
| Borphosphat | Fa. Aldrich |
| Melaminpolyphosphat | Budit 3141, Fa. Budenheim |
| Melamincyanurat | Melapur MC, Fa. Ciba SC |
| Aluminiumphosphat | Fa. Aldrich |
| Piperazinpyrophosphat | ADK Stab FP-4100, Fa. Adeka |
| Zinkoxid | Zinkoxid aktiv Rheinchemie |
| Zinkstearat | Liga 101, Fa. Greven Fett-Chemie |

## Patentansprüche

1. Flammgeschützte Klebe- und Dichtmassen, enthaltend
0,1 - 99,9 Gew.-% adhäsives oder thermoplastisches Polymer
0,1 - 99,9 Gew.-% Flammschutzmittel, **dadurch gekennzeichnet, dass** das Flammschutzmittel mindestens ein Phosphinsäuresalz der Formel (I) und/oder ein Diphosphinsäuresalz der Formel (II), 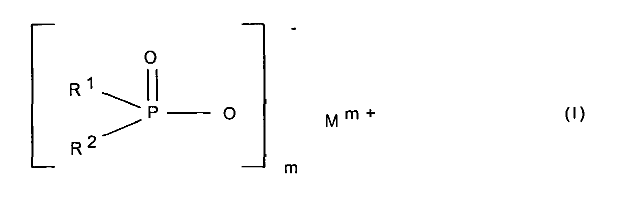 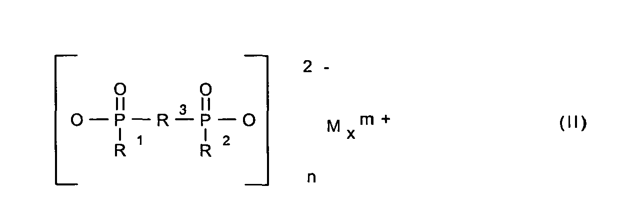 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Zn, Sb, Sn, Ge, Zn, Ti, Fe, Zr, Ce, Bi, Sr, Mn, Li, Na, K und/oder eine protonierte Stickstoffbase;
m 1 bis 4; n 1 bis 4 und x 1 bis 4 bedeuten, enthält, und wobei es sich bei den adhäsiven Polymeren um Acrylatharze, Polyurethanharze, gesättigte und ungesättigte Polyesterharze, Styrol-Butadien-Copolymere, Vinylacetat-Copolymere, Silicone, Synthesekautschuk und/oder Polyolefinharze handelt.

2. Flammgeschützte Klebe- und Dichtmassen nach Anspruch 1, **dadurch gekennzeichnet, dass** R¹, R² gleich oder verschieden sind und Methyl, Ethyl, n-Propyl, iso-Propyl, n-Butyl, sec. Butyl, tert.-Butyl, n-Pentyl und/oder Phenyl bedeuten.

3. Flammgeschützte Klebe- und Dichtmassen nach Anspruch 1 oder 2, **dadurch gekennzeichnet, dass** R³ Methylen, Ethylen, n-Propylen, iso-Propylen, n-Butylen, tert.-Butylen, n-Pentylen oder n-Octylen; Phenylen oder Naphthylen; Methylphenylen, Ethylphenylen, tert.-Butylphenylen, Methylnaphthylen, Ethyl-naphthylen oder tert.-Butylnaphthylen; Phenylmethylen, Phenylethylen, Phenylpropylen oder Phenylbutylen bedeutet.

4. Flammgeschützte Klebe- und Dichtmassen nach einem oder mehreren der Ansprüche 1 bis 3, **dadurch gekennzeichnet, dass** das Phosphinsäuresalz der Formel (I) und/oder das Diphosphinsäuresalz der Formel (II) in Mengen von 70 bis 100 Gew.-% im Flammschutzmittel enthalten sind.

5. Flammgeschützte Klebe- und Dichtmassen nach einem oder mehreren der Ansprüche 1 bis 4, **dadurch gekennzeichnet, dass** das Flammschutzmittel
a) 30 bis 99,9 Gew.-% Phosphinsäuresalz der Formel (I) und/oder Diphosphinsäuresalz der Formel (II) und
b) 0,1 bis 70 Gew.-% Synergist enthält.

6. Flammgeschützte Klebe- und Dichtmassen nach einem oder mehreren der Ansprüche 1 bis 5, **dadurch gekennzeichnet, dass** das Flammschutzmittel
a) 60 bis 99 Gew.-% Phosphinsäuresalz der Formel (I) und/oder Diphosphinsäuresalz der Formel (II) und
b) 1 bis 40 Gew.-% Synergist enthält.

7. Flammgeschützte Klebe- und Dichtmassen nach einem oder mehreren der Ansprüche 1 bis 6, **dadurch gekennzeichnet, dass** der Synergist eine Stickstoff-, Phosphor- oder Phosphorstickstoffverbindung enthält.

8. Flammgeschützte Klebe- und Dichtmassen nach einem oder mehreren der Ansprüche 1 bis 7, **dadurch gekennzeichnet, dass** es sich bei dem Synergisten um Allantoin, Cyanursäure, Glycoluril, Harnstoff, Melamin, Melam, Melem, Melon, Melaminphosphat, Melaminpyrophosphat, Melaminpolyphosphat, Melampolyphosphat, Melempolyphosphat, Melonpolyphosphat, Melamincyanurat, Piperazinphosphat, Piperazinpyrophosphat, Carbodiimid, sterisch gehinderte Phenole, Phosphinoxid, Hypophosphit, cyclische Phosphonate, Triaryl(alkyl)phosphite, alkyl- und arylsubstituierte Phosphate, Aluminium-, Zinn-, Bor-, Magnesium-, Calcium-, Cerverbindungen, Zinkoxid, Zinkcarbonat, Zinkstannat, Zinkborat, Zinkhydrogenphosphat, Zinkpyrophosphat, Zinkoleat, Zinkstearat und/oder Zinkphosphat handelt.

9. Flammgeschützte Klebe- und Dichtmassen nach einem oder mehreren der Ansprüche 1 bis 7, **dadurch gekennzeichnet, dass** es sich bei den adhäsiven oder thermoplastischen Polymeren um solche handelt, die auf Leim, Cellulose, modifizierte Cellulose, Cellulosederivativen, Stärke, Amylose, Amylopectin oder Polysaccharide basieren.

10. Flammgeschützte Klebe- und Dichtmassen nach einem oder mehreren der Ansprüche 1 bis 7, **dadurch gekennzeichnet, dass** es sich bei den adhäsiven oder thermoplastischen Polymeren um solche handelt, die auf einem Elastomer wie Naturkautschuk, Homopolymeren oder Copolymeren von konjugierten Kohlenwasserstoff-Dienen, Chloropren-Homopolymere oder Copolymere, Caboxylgruppen-enthaltende Elastomere, Kautschukabkömmlinge, Regenerat, Synthesekautschuk, Carboxylgruppenenthaltende Acrylonitril-Butadien-Kautschuk, Butylkautschuk, Elastomere basierend auf Homopolymeren oder Copolymeren von ungesättigten aliphatischen Kohlenwasserstoffen mit nur einer C=C-Doppelbindung und deren Abkömmlinge, basieren.

11. Flammgeschützte Klebe- und Dichtmassen nach einem oder mehreren der Ansprüche 1 bis 7, **dadurch gekennzeichnet, dass** es sich bei den adhäsiven oder thermoplastischen Polymeren um solche handelt, die auf Homopolymeren oder Copolymeren von Ethylen, Propylen, Polyethylen, Polypropylen, Copolymere von Ethylen, Propylen oder Isobuten, Homopolymeren oder Copolymeren von Kohlenwasserstoffen mit vier oder mehr Kohlenstoffatomen und durch Modifikation wie chemische Nachbehandlung, Reaktion mit Halogenen oder Halogenhaltigen Verbindungen oder Oxidation gewonnene Abkömmlinge basieren.

12. Flammgeschützte Klebe- und Dichtmassen nach einem oder mehreren der Ansprüche 1 bis 7, **dadurch gekennzeichnet, dass** es sich bei den thermoplastischen Polymeren um Ethylenmischpolymere, Organopolysiloxane, ataktische Poly-alpha-Olefine (APAO), Polyisobutylen, Styrol-Butadien-Styrol-Blockpolymere, Styrol-Isopren-Styrol-Blockpolymere, Polyamide, Polyester, Polyvinylacetatplastomere, Copolyester, Butylkautschuke, ternäre und quarternäre Copolyamide, Polyurethane, und/oder Epoxidharze handelt, die als hot-melts eingesetzt werden.

13. Verwendung von flammgeschützten Klebe- und Dichtmassen nach einem oder mehreren der Ansprüche 1 bis 12 in Formkörpern.

14. Verwendung nach Anspruch 13, **dadurch gekennzeichnet, dass** es sich bei den Formkörpern um Laminate handelt, welche mindestens eine nicht klebende Trägerschicht und mindestens eine Klebeschicht enthalten, **dadurch gekennzeichnet, dass** mindestens eine der Schichten die flammgeschützten Klebe- und Dichtmassen nach einem oder mehreren der Ansprüche 1 bis 12 enthält.

15. Verwendung nach Anspruch 13, **dadurch gekennzeichnet, dass** der Formkörper besteht aus flexiblem Kupferkaschiertem Substrat, Lötstopplack und flammgeschützter Klebe- und Dichtmasse nach einem oder mehreren der Ansprüche 1 bis 12,

16. Verwendung nach Anspruch 13, **dadurch gekennzeichnet, dass** der Formkörper hergestellt wird, indem die flammgeschützte Klebe- und Dichtmasse auf eine Trägerschicht aufgebracht wird und durch Bestrahlung mit Licht ausgehärtet wird.

17. Verwendung nach Anspruch 13, **dadurch gekennzeichnet, dass** der Formkörper-hergestellt wird, indem eine flammgeschützte Klebe- und Dichtmasse auf einen Trägerfilm auflaminiert wird.

18. Verwendung nach Anspruch 13, **dadurch gekennzeichnet, dass** der Formkörper hergestellt wird, indem ein Trägermaterial auf beiden Seiten mit flammgeschützter Klebe- und Dichtmasse beschichtet wird.

19. Verwendung der flammgeschützten Klebe- und Dichtmasse nach einem oder mehreren der Ansprüche 1 bis 12 und/oder der Formkörper nach einem oder mehreren der Ansprüche 14 bis 18 für Flachkabel, flexible Leiterplatten, Automobilinnenausrüstung, elektrische Halbleiter, Abdeckungschichten, optische Filme zum Schutz von Fenstern vor Sonneneinstrahlung, Leiterplatten, optische Leiter, Spulen zum Entmagnetisieren, zum Befestigen von elektrischen Bauelementen, zur Herstellung von elektrischen Isolationsmaterialien, Mittel- und Hochspannungsisolatoren, Kabelendverschlüsse, Kabelmuffen, zum Vergießen oder Einbetten von elektrischen oder elektronischen oder photovoltaischen Bauelementen, zum Abdichten, zur Erzeugung von Beschichtungen, zum Isolieren von elektrischen Leitern sowie zum Verkleben und Laminieren der oben genannten Substrate, Windeln, Krankenhaushygieneartikel, Damenhygieneartikel, OP-Bedarf, Inkontinenzartikel, Verkleben von Kartonagen, Verpackungsmaterialien, Klebebänder, Etiketten, Isolierglasscheiben, Verklebungen von Rohren oder Spritzgussteilen, Haftklebemassen, flexible Verklebungen von Printed Circuit Boards, Hitzeaktivierbare Haftklebebänder, zum Verguss von elektrischen bzw. elektronischen Bauteilen und/oder als wärmehärtende Epoxy molding compounds (EMC).
